# EUROPEAN PATENT APPLICATION

(11) **EP 4 538 851 A1**
(43) Date of publication of application: **16.04.2025**
(21) Application number: 23870403.5
(22) Date of filing: 15.09.2023
(51) Int. Cl.: G06F 3/14

(54) **INFORMATION PROCESSING METHOD AND ELECTRONIC DEVICE**

(30) Priority: 30.09.2022 CN 202211214683
(71) Applicant: Huawei Technologies Co., Ltd., Shenzhen, Guangdong 518129 (CN)
(72) Inventor: ZHANG, Chao, Shenzhen, Guangdong 518129 (CN); DU, Zhong, Shenzhen, Guangdong 518129 (CN); ZHANG, Leshao, Shenzhen, Guangdong 518129 (CN)
(74) Representative: MERH-IP Matias Erny Reichl Hoffmann Patentanwälte PartG mbB
(86) International application number: PCT/CN2023/119175
(87) International publication number: WO 2024/067169

(57) **Abstract**

Embodiments of this application provide an information processing method and an electronic device, and relate to the field of terminal device technologies. The method includes: After displaying AOD information, a local end may display an application interface of a specified application based on a user operation and application data obtained from a peer end. The specified application is one of applications corresponding to the AOD information. The method can be used to implement one-tap direct access to the application interface corresponding to the AOD information, and process the AOD information across systems.

## Description

This application claims priority to Chinese Patent Application No. 202211214683.1, filed with the China National Intellectual Property Administration on September 30, 2022 and entitled "INFORMATION PROCESSING METHOD AND ELECTRONIC DEVICE", which is incorporated herein by reference in its entirety.

### TECHNICAL FIELD

Embodiments of this application relate to the field of terminal device technologies, and in particular, to an information processing method and an electronic device.

### BACKGROUND

With development of communication technologies, computing capabilities and hardware capabilities of electronic devices are improved, and the electronic devices may have always on display (Always On Display, AOD) information in a screen-off state.

A smart screen is used as an example for description. Currently, AOD information displayed on the smart screen is mainly general information obtained from the smart screen, for example, general information such as a date, time, and weather.

Currently, in a conventional technology, when displaying AOD information and processing the AOD information, an electronic device can implement processing only based on information of a single system, and cannot process the AOD information across systems.

### SUMMARY

To resolve the foregoing technical problem, this application provides an information processing method and an electronic device. In the method, AOD information may be processed across systems.

According to a first aspect, an embodiment of this application provides an information processing method, applied to a first electronic device. The method includes: displaying AOD information in a screen-off interface, where the AOD information includes application information of at least one application; and in response to a received first user operation, displaying an application interface of a target application based on application data obtained from a second electronic device, where the at least one application includes the target application.

For example, the first electronic device configured to display the AOD information may be referred to as a local end.

For example, an electronic device (for example, the second electronic device, and a third electronic device, a fourth electronic device, and the like that are mentioned in subsequent implementations) that interacts with the first electronic device may be referred to as a peer end.

For example, the AOD information may include application information of the local end and/or the peer end.

For example, application information corresponding to the target application in the AOD information may be application information of a target application at the local end, or may be application information of a target application at the peer end. This is not limited herein.

For example, the first user operation may be a user operation that indicates the target application, for example, a physical button of a remote control or a voice instruction. This is not limited herein.

For example, if the target application may be an audio/video application, the application data in the application interface may be an audio/video stream.

For example, the target application may not be an audio/video application, and the application interface may be static, for example, an express delivery progress interface.

For example, the application interface may be displayed in a screen-on state, or may be displayed in a screen-off state.

For example, in the screen-off interface, the application interface may be displayed in the screen-off interface in a small window manner, for example, in a floating window manner. For example, a user may operate the floating window, so that the first electronic device (herein and subsequent implementations are described by using a smart screen as an example) may display the application interface in a full-screen manner in the screen-on state.

For example, the application data obtained by the first electronic device from the second electronic device may be application data obtained from the second electronic device after the first user operation is received, or may be application data obtained from the second electronic device before the first user operation is received.

In this embodiment of this application, the first electronic device may display the AOD information in the screen-off interface, and display the application interface of the target application on the first electronic device based on an operation performed by the user on the application information of the target application in the AOD information and the application data obtained from the second electronic device. In this embodiment, the first electronic device may implement one-tap direct access to the application interface corresponding to the AOD information. The user does not need to operate the first electronic device to turn on a screen and then enter a home screen to implement an operation of the target application. In addition, the application data displayed by the first electronic device is obtained from a peer end (the second electronic device herein), so that the AOD information can be processed across systems.

According to the first aspect, the displaying an application interface of a target application includes: displaying the application interface of the target application in a screen-on interface.

For example, the smart screen may switch from the screen-off state to the screen-on state based on a user operation performed by the user on the specified application corresponding to the AOD information, so that the application interface of the target application is displayed in the screen-on interface, and the screen is turned on without a manual operation of the user.

According to any one of the first aspect or the foregoing implementations of the first aspect, the application data includes: target application data that is of the target application and that is sent by the second electronic device to the first electronic device through a projection connection; and the displaying an application interface of a target application based on application data obtained from a second electronic device includes: displaying the application interface of the target application based on the target application data.

For example, regardless of whether the target application is locally installed on the smart screen, the smart screen may display the application interface of the target application in this implementation.

For example, the target application is not locally installed on the smart screen. For example, the target application is a video application X. In this case, the smart screen may display, on a screen of the smart screen, an audio/video stream that is of the video application X and that is projected by the first electronic device (a mobile phone 1 is used as an example for description) to the smart screen. In this way, the smart screen may display AOD information including application information of the video application X, to implement projection display of a video play interface of the video application X on the smart screen through a one-tap operation of the user.

According to any one of the first aspect or the foregoing implementations of the first aspect, the application data includes a uniform resource locator of the target application, and the displaying an application interface of a target application based on application data obtained from a second electronic device includes: displaying the application interface of the target application based on the uniform resource locator.

For example, the uniform resource locator may be used to link to the application interface of the target application.

For example, the uniform resource locator is a deeplink. When the target application is installed on the smart screen, the smart screen may not need to obtain projected application data, for example, an audio/video stream, from the mobile phone 1, and the target application may be started through the deeplink. In this way, the application interface of the target application, for example, a video play interface, is displayed on the screen of the smart screen. In this implementation, the application interface of the specified application in the AOD information can be displayed more quickly.

According to any one of the first aspect or the foregoing implementations of the first aspect, the displaying always on display AOD information in a screen-off interface includes: when the first electronic device is in the screen-off state and detects that a distance between the first electronic device and the second electronic device meets a preset condition, displaying the AOD information in the screen-off interface.

For example, if a distance between the mobile phone 1 and the smart screen meets the preset condition, it may indicate that a user of the mobile phone 1 has an intent to watch the smart screen. In this case, the smart screen may display the AOD information in the screen-off interface. Therefore, whether to display the AOD information in the screen-off interface can be flexibly controlled, to reduce light pollution of the smart screen.

According to any one of the first aspect or the foregoing implementations of the first aspect, the displaying AOD information in a screen-off interface includes: displaying the AOD information in the screen-off interface based on a distance between the first electronic device and the second electronic device.

For example, optionally, when the distance meets the preset condition, the smart screen may flexibly determine display content of the AOD information based on the distance. In this case, when the distance changes, the AOD information may change, to intelligently and flexibly control a change of the AOD information.

According to any one of the first aspect or the foregoing implementations of the first aspect, when the distance changes, a display style and/or display content of the AOD information change/changes.

For example, optionally, when the distance meets the preset condition, and when the distance changes, a display style (for example, a layout of displayed information (a text and/or a picture), a size of a word, a color of a word, and a picture); and/or, the display content (for example, a quantity of applications of the at least one application, and/or application information of each application in the AOD information) of the AOD information displayed by the smart screen changes.

In this way, in a scenario in which the user has different distances (which may be different distance values or different distance ranges) to the smart screen, the smart screen may flexibly adjust the display style and/or the display content of the displayed AOD information. This prevents a problem of screen burn-in of the smart screen when same content is displayed at a same display position for a long time.

According to any one of the first aspect or the foregoing implementations of the first aspect, a shorter distance indicates more the display content.

For example, it is considered that a shorter distance between the user and the smart screen indicates that the user needs to view more information with a more refined granularity; therefore, the smart screen may further enrich display content of the AOD information when the distance is shorter.

According to any one of the first aspect or the foregoing implementations of the first aspect, before the displaying AOD information in a screen-off interface, the method further includes: obtaining first application information from the second electronic device, where the first application information includes the application information of the at least one application.

Optionally, when the smart screen is in the screen-off state, the smart screen may obtain the first application information from the mobile phone 1 when the smart screen detects that a distance between the smart screen and the mobile phone 1 meets the preset condition.

In this case, the smart screen may be in the screen-off interface, and the smart screen may use some or all application information in the first application information as the AOD information for always on display.

For example, the smart screen may display application information of the mobile phone 1 in the AOD information, and in a scenario of one-tap direct access to the AOD information, may implement one-tap display of the application interface of the specified application (for example, the target application) shared by the mobile phone 1 in the AOD information, to process the AOD information across systems.

According to any one of the first aspect or the foregoing implementations of the first aspect, after the displaying AOD information in a screen-off interface, the method further includes: when the first electronic device is in the screen-off state and detects that a distance between the first electronic device and at least one third electronic device meets the preset condition, updating the AOD information in the screen-off interface, where updated AOD information includes target common information obtained based on a device account of the first electronic device, where the target common information is unrelated to respective device accounts of the second electronic device and the at least one third electronic device.

For example, in a scenario in which at least two users approach the smart screen, for example, the two users are respectively the mobile phone 1 and a mobile phone 2 (the mobile phone 2 herein is an example of the third electronic device), the smart screen may update the AOD information to target common information obtained from a device account of the smart screen, and the target common information is unrelated to information corresponding to respective device accounts of the mobile phone 1 and the mobile phone 2.

In this way, when a plurality of users approach the smart screen, the smart screen updates the display content of the AOD information to the target common information corresponding to the device account corresponding to the smart screen. This can prevent private application information corresponding to an account of a personal device from being watched by another user when the plurality of users watch the smart screen, to protect information privacy of the user.

According to any one of the first aspect or the foregoing implementations of the first aspect, the target common information includes: first common information corresponding to the device account of the first electronic device, where the first common information includes application information (for example, weather information or clock information) unrelated to the device accounts of the second electronic device and the at least one third electronic device, and/or information about a smart home electronic device (for example, a car, an oven, or a humidifier).

For example, the common information displayed by the smart screen may include the information about the smart home device and/or application information of the local account of the smart screen.

According to any one of the first aspect or the foregoing implementations of the first aspect, before the updating the AOD information in the screen-off interface, the method further includes: obtaining respective second application information from the at least one third electronic device, where the target common information further includes common application information; and the common application information is common application information between the first application information and the respective second application information of the at least one third electronic device.

For example, if both a user of the mobile phone 1 and a user of the mobile phone 2 have watched a TV series with a series name A by using the video application X, related information of the TV series A of the video application X may be used as an example of the common application information herein.

According to any one of the first aspect or the foregoing implementations of the first aspect, after the displaying AOD information in a screen-off interface, or after the updating the AOD information in the screen-off interface, the method further includes: when the first electronic device is in the screen-off state and detects that only a distance between the first electronic device and a fourth electronic device meets the preset condition, continuing to update the AOD information in the screen-off interface, where updated AOD information includes third application information obtained from the fourth electronic device.

For example, an AOD information update scenario may be a scenario in which application information of a single user is switched to application information of another single user. For example, the smart screen switches application information in the AOD information from application information obtained from the second electronic device to application information obtained from the fourth electronic device.

For example, the AOD information update scenario may be a scenario in which application information of a plurality of users is switched to application information of a single user. For example, the smart screen switches information in the AOD information from the target common information to the application information obtained from the fourth electronic device. For example, the fourth electronic device may be the same as the second electronic device, or the fourth electronic device is the same as one third electronic device, or the fourth electronic device is different from both the second electronic device and the third electronic device.

According to any one of the first aspect or the foregoing implementations of the first aspect, the application data is application data related to target application information, and the target application information is application information of the target application in the AOD information.

For example, when the application data includes the uniform resource locator, the target application information of the target application may be recent play record information (for example, a recently played video A) of the video application X, the uniform resource locator may be a uniform resource locator that can be used to link to a play interface of the video A of the video application X. For example, the application data includes a video stream that is of the video A and that is sent by the mobile phone 1 to the smart screen through the projection connection. In this way, the video stream is related to the target application information.

In this way, after the smart screen displays the application information in the AOD information, the smart screen may obtain, from a peer end based on a user operation, application data related to the application information, and display the application interface of the corresponding target application based on the application data.

According to a second aspect, an embodiment of this application provides an information processing system. The system includes the first electronic device and the second electronic device according to any one of the first aspect or the foregoing implementations of the first aspect.

For example, the first electronic device may display AOD information in a screen-off interface, where the AOD information includes application information of at least one application.

For example, the first electronic device may display, in response to a received first user operation, an application interface of a target application based on application data obtained from the second electronic device.

The at least one application includes the target application.

For example, the second electronic device may send the application data to the first electronic device.

For example, the second electronic device may send the application data to the first electronic device after the first electronic device receives the first user operation, or may send the application data to the first electronic device before the first electronic device receives the first user operation.

In a possible implementation, the first electronic device may display the application interface of the target application in a screen-on interface.

In a possible implementation, the second electronic device may send target application data of the target application to the first electronic device through a projection connection; and the first electronic device may display the application interface of the target application based on the target application data.

In a possible implementation, the second electronic device may send a uniform resource locator of the target application to the first electronic device; and the first electronic device may display the application interface of the target application based on the uniform resource locator.

In a possible implementation, when the first electronic device is in a screen-off state and detects that a distance between the first electronic device and the second electronic device meets a preset condition, the first electronic device may display the AOD information in the screen-off interface.

In a possible implementation, the first electronic device may display the AOD information in the screen-off interface based on a distance between the first electronic device and the second electronic device.

In a possible implementation, when the distance changes, the first electronic device may change a display style and/or display content of the AOD information.

In a possible implementation, the first electronic device may control, when detecting that the distance is shorter, to display more display content.

In a possible implementation, the second electronic device may send first application information to the first electronic device, where the first application information includes the application information of the at least one application. In this way, the first electronic device may display the first application information when displaying the AOD information in the screen-off interface.

In a possible implementation, the system may further include the at least one third electronic device in any implementation of the first aspect.

In a possible implementation, when the first electronic device is in the screen-off state and detects that a distance between the first electronic device and at least one third electronic device meets the preset condition, the first electronic device may update the AOD information in the screen-off interface, where updated AOD information includes target common information obtained based on a device account of the first electronic device, where the target common information is unrelated to respective device accounts of the second electronic device and the at least one third electronic device.

In a possible implementation, the target common information includes: first common information corresponding to the device account of the first electronic device, where the first common information includes application information (for example, weather information or clock information) unrelated to the device accounts of the second electronic device and the at least one third electronic device, and/or information about a smart home electronic device (for example, a car, an oven, or a humidifier).

In a possible implementation, the at least one third electronic device may separately send respective second application information to the first electronic device; and the target common information further includes common application information, where the common application information is common application information between the first application information and the respective second application information of the at least one third electronic device.

In a possible implementation, the system further includes a fourth electronic device in any implementation of the first aspect.

For example, the fourth electronic device may send third application information to the first electronic device.

For example, when the first electronic device is in the screen-off state and detects that only a distance between the first electronic device and the fourth electronic device meets the preset condition, the first electronic device continues to update the AOD information in the screen-off interface, where updated AOD information includes the third application information.

In a possible implementation, the application data in any one of the foregoing implementations is application data related to target application information, and the target application information is application information of the target application in the AOD information.

Any one of the second aspect and the implementations of the second aspect respectively correspond to any one of the first aspect and the implementations of the first aspect. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides an information processing apparatus. The apparatus is configured to perform the method in any one of the first aspect or the implementations of the first aspect.

For technical effects corresponding to the third aspect, refer to technical effects corresponding to any one of the first aspect and the implementations of the first aspect. Details are not described herein again.

According to a fourth aspect, an embodiment of this application provides an electronic device. The electronic device includes: a memory and a processor. The memory is coupled to the processor. The memory stores program instructions. When the program instructions are executed by the processor, the electronic device is enabled to perform the method according to any one of the first aspect and the implementations of the first aspect.

For technical effects corresponding to the fourth aspect, refer to technical effects corresponding to any one of the first aspect and the implementations of the first aspect. Details are not described herein again.

According to a fifth aspect, an embodiment of this application provides a computer-readable medium. The computer-readable medium is configured to store a computer program, and when the computer program runs on an electronic device, the electronic device is enabled to perform the method according to any one of the first aspect or the implementations of the first aspect.

For technical effects corresponding to the fifth aspect, refer to technical effects corresponding to any one of the first aspect and the implementations of the first aspect. Details are not described herein again.

According to a sixth aspect, an embodiment of this application provides a computer program product including instructions. When the computer program product runs on a computer, the computer is enabled to perform the method according to any one of the first aspect or the implementations of the first aspect.

For technical effects corresponding to the sixth aspect, refer to technical effects corresponding to any one of the first aspect and the implementations of the first aspect. Details are not described herein again.

According to a seventh aspect, an embodiment of this application provides a chip. The chip includes one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the method according to any one of the first aspect and the implementations of the first aspect.

For technical effects corresponding to the seventh aspect, refer to technical effects corresponding to any one of the first aspect and the implementations of the first aspect. Details are not described herein again.

### BRIEF DESCRIPTION OF DRAWINGS

To describe the technical solutions in embodiments of this application more clearly, the following briefly introduces the accompanying drawings for describing embodiments of this application. It is clear that the accompanying drawings in the following description show merely some embodiments of this application, and a person of ordinary skill in the art may still derive other drawings from these accompanying drawings without creative efforts.
FIG. 1 is an example diagram of a structure of an electronic device;
FIG. 2 is an example diagram of a software structure of an electronic device;
FIG. 3a is an example diagram of an application scenario;
FIG. 3b is an example diagram of a structure of an electronic device;
FIG. 3c is an example diagram of an application scenario;
FIG. 4a is an example diagram of an information processing process;
FIG. 4b is an example diagram of an information processing process;
FIG. 4c is an example diagram of an information processing process;
FIG. 5a is an example diagram of an application scenario;
FIG. 5b(1) to FIG. 5b(4) are an example diagram of an application scenario;
FIG. 5c(1) to FIG. 5c(3) are an example diagram of an application scenario;
FIG. 5d is an example diagram of an application scenario;
FIG. 5e is an example diagram of an application scenario; and
FIG. 6 is a diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may represent the following cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, "a plurality of" means two or more, unless otherwise specified. For example, a plurality of processing units mean two or more processing units, and a plurality of systems mean two or more systems.

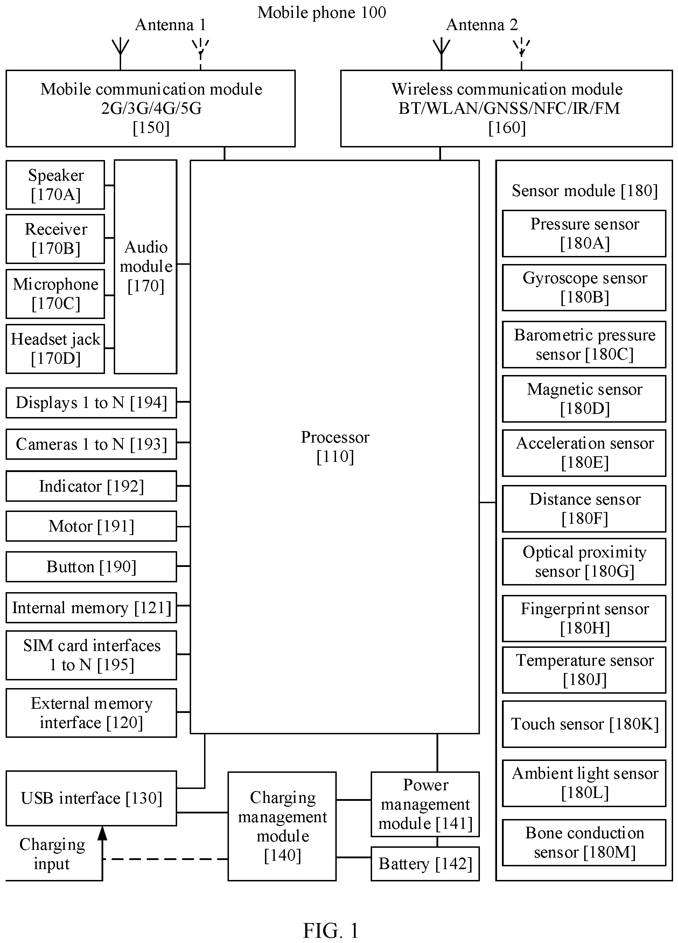

FIG. 1 is a diagram of a structure of an electronic device 100. It should be understood that the electronic device 100 shown in FIG. 1 is only an example of the electronic device. Optionally, the electronic device 100 may be a terminal, or may be referred to as a terminal device. The terminal may be a device having a display, such as a cellular phone (cellular phone), a tablet computer (pad), a wearable device, or an Internet of Things device. This is not limited in this application. It should be noted that the electronic device 100 may have more or fewer components than those shown in the figure, two or more components may be combined, or there may be different component configurations. Various components shown in FIG. 1 may be implemented in hardware including one or more signal processing circuits and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The camera 193 is configured to capture a static image or a video. An optical image of an object is generated through the lens, and is projected onto the photosensitive element.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, so that the electronic device 100 performs the method in embodiments of this application. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, the Android system of the layered architecture is used as an example to describe the software structure of the electronic device 100.

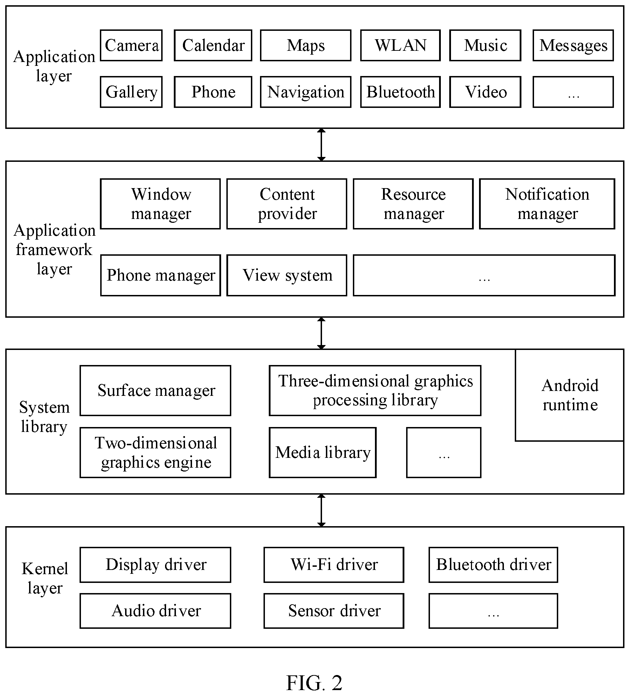

FIG. 2 is a block diagram of the software structure of the electronic device 100 in this embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, an application package may include applications such as Camera, Gallery, Calendar, Calls, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is given, the electronic device vibrates, or the indicator light blinks.

The system library and runtime layer includes a system library and Android runtime (Android runtime). The system library may include a plurality of functional modules, for example, a surface manager (surface manager), a media library (Media Libraries), a three-dimensional graphics processing library (for example, OpenGL ES), and a 2D graphics engine (for example, SGL). The 3D graphics library is configured to implement three-dimensional graphics drawing, image rendering, composition, layer processing, and the like. The Android runtime includes a kernel library and a virtual machine. The Android runtime is responsible for scheduling and management of the Android system. The kernel library includes two parts: a function that needs to be called in Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The surface manager is configured to manage a display subsystem and provide fusion of 2D and 3D layers for a plurality of applications.

The media library supports play and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 2 do not constitute any specific limitation on the electronic device 100. In some other embodiments of this application, the electronic device 100 may include more or fewer components than the components shown in the figure, some components may be combined, or some components may be split, or different component arrangements may be used.

A large-screen electronic device like a smart television, a smart screen, or a smart cockpit is usually in a screen-off state. To improve user experience, the large-screen electronic device may have always on display (Always On Display, AOD) information in the screen-off state.

The smart screen is used as an example for description. Currently, AOD information displayed on the smart screen is mainly general information obtained from the smart screen (for example, a software service module), for example, general information such as a date, time, and weather.

In addition, display and disabling of the AOD information of the smart screen are manually implemented by a user. Once display of the AOD information is enabled, the smart screen is in a steady-on state. This causes light pollution and screen burn-in.

Therefore, in a conventional technology, when displaying the AOD information, the large-screen electronic device can display the AOD information only based on information of a single system, and light pollution and screen burn-in are easily caused.

To resolve many problems existing when the large-screen electronic device displays AOD in the conventional technology, this application provides an AOD display method for an electronic device.

For example, the electronic device may be a large-screen electronic device having a common attribute, for example, a smart screen, a smart television, or a smart cockpit, or may be an electronic device having a private attribute, for example, a mobile phone, a tablet computer, or a notebook computer.

In this application, an example in which the electronic device is a smart screen is used to describe the AOD display method in this application, to resolve a problem that screen burn-in and light pollution are easily caused when the large-screen electronic device displays AOD information. When the electronic device is another electronic device, execution principles and effects of the method are similar. Details are not described herein again.

For example, the electronic device in this application may be referred to as a local end, and the local end may interact with a peer end to obtain application information from the peer end.

For example, the local end may be an electronic device configured to display AOD information, and the peer end may be an electronic device or a server that provides application information.

For example, when the peer end is an electronic device, for structures of the electronic devices at the local end and the peer end, refer to structures of the electronic devices in FIG. 1 and

FIG. 2. The structures of the electronic devices at the local end and the peer end are not limited in this application. When the peer end is a server, a structure of the server may be a structure of any server. This is not limited in this application.

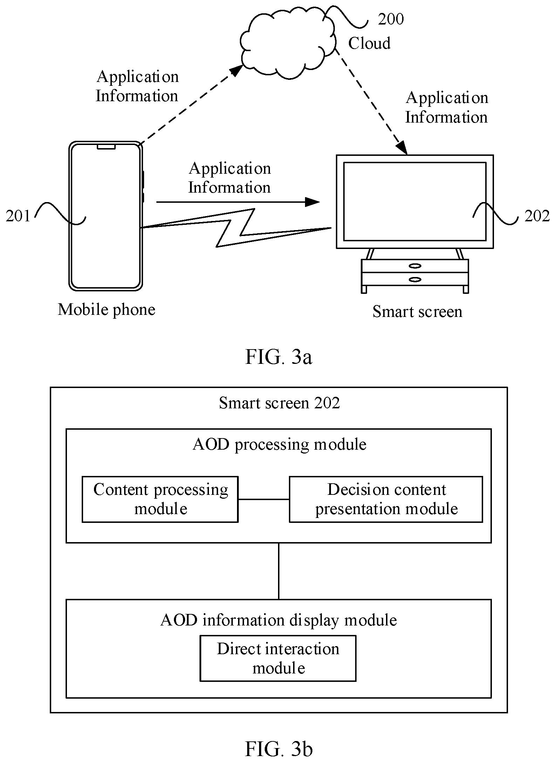

For example, FIG. 3a is an example diagram of an application scenario according to this application, and FIG. 3b is an example diagram of a structure of a smart screen 202.

In FIG. 3a, a local end is the smart screen 202, and a peer end may be a mobile phone 201 or a cloud 200.

The following describes the scenario in FIG. 3a with reference to FIG. 3b.

As shown in FIG. 3b, the smart screen 202 may include an AOD processing module and an AOD information display module.

For example, the AOD processing module may include a content processing module and a decision content presentation module.

For example, the AOD information display module may include a direct interaction module.

In the scenario shown in FIG. 3a, in a possible implementation, a user may hold the mobile phone 201 close to the smart screen 202. In this case, the content processing module in the smart screen 202 shown in FIG. 3b may detect a distance between the smart screen 202 and the mobile phone 201.

For example, the distance between the smart screen and the mobile phone may be sensed by using any one or more technologies such as a millimeter wave, an ultrasonic wave, ultra-wideband (Ultra Wide Band, UWB), and Bluetooth. This is not limited in this application.

For example, the smart screen 202 may transmit a signal based on a specific period, to detect a distance between the smart screen 202 and another electronic device.

Certainly, in another embodiment, the peer end may alternatively detect a distance between the local end and the peer end. A principle is similar. However, because in most scenarios, a small-screen electronic device (for example, the mobile phone 201) is sensitive to power consumption, continuously transmitting a signal at a high frequency may cause high power consumption of the mobile phone 201. Therefore, to avoid high power consumption of the peer end, the local end may detect the distance between the local end and the electronic device at the peer end.

In the scenario shown in FIG. 3a, in another possible implementation, the user does not carry any electronic device, but the user goes to the smart screen 202. In this case, the content processing module in the smart screen 202 shown in FIG. 3b may further detect, by using the millimeter wave technology, through image information collection by using a camera, or in another manner, a distance between the user close to the smart screen 202 and the smart screen 202.

For example, a method for detecting the distance between the smart screen and the user by the smart screen may be implemented by using any distance detection technology developed in the conventional technology or in the future. This is not limited in this application.

For example, the decision content presentation module shown in FIG. 3b may obtain the application information from the peer end when determining that the distance detected by the content processing module meets a preset condition (for example, the distance is less than a threshold, and the preset condition is described in detail below).

For example, the application information may be application information preset by the peer end or defined by the user, and the application information may be shared to a large-screen electronic device for AOD display on the large-screen electronic device.

For example, the application information may be an application message of a specified type of a specified application. For example, both the specified application and the specified type may be extended by the user based on a requirement.

For example, the specified application may include one or more applications, and different applications may have priorities. When a quantity of applications corresponding to the AOD information is limited, a higher priority of an application indicates that application information of the application may be preferentially used as AOD information of the large-screen electronic device (for example, the smart screen 202 shown in FIG. 3a) for display.

For example, the specified application may include but is not limited to a ticket booking application, a to-do list application, an audio/video application, an express delivery application, and the like, and may be specifically flexibly configured based on a user requirement.

For example, a message type of the application information may include but is not limited to a notification message, an application record message (for example, an audio/video play record), and the like.

For example, application information of different message types of a same application may have information priorities. When an amount of information displayed by the AOD information for the same application is limited, a higher information priority of a message type of application information indicates that the application information of the message type of the application may be preferentially displayed as AOD information of the large-screen electronic device (for example, the smart screen 202 shown in FIG. 3a).

For example, the application information may be application information that is considered by the user to be important and that needs to be reminded.

For example, the application information may be flight information of a flight booked by the user in the ticket booking application. For another example, the application message may be to-do information of the to-do list application. For another example, the application information may be a historical music/video play record of the audio/video application. For another example, the application information may be express delivery progress information of the express delivery application. Specific application information may vary with different application functions. This is not limited in this application.

For example, still refer to FIG. 3a. In a possible implementation, if the smart screen 202 detects that the distance between the smart screen 202 and the mobile phone 201 meets the preset condition, the smart screen 202 may establish a communication connection to the mobile phone 201, and then the mobile phone 201 may send the application message of the specified type of the specified application to the smart screen 202 through the communication connection.

For example, a manner of the communication connection between the smart screen 202 and the mobile phone 201 may include but is not limited to Wi-Fi, Bluetooth, login to a same account, and the like. This is not limited in this application.

For example, still refer to FIG. 3a. In another possible implementation, the application information of the mobile phone 201 may be synchronized to the cloud 200, and when the smart screen 202 detects that the distance between the smart screen 202 and the user meets the preset condition, the smart screen 202 may obtain the application information of the mobile phone 201 of the user from the cloud 200.

For example, as shown in FIG. 3a, a family account may be logged in to on the smart screen 202, the family account may correspond to each family member account, and a member account of the family account may be logged in to on the mobile phone 201. In addition, data (including application information) of the smart screen 202 and the mobile phone 201 is synchronized to the cloud 200 through respective accounts.

For example, the data of the mobile phone 201 stored in the cloud 200 includes face information of the user of the mobile phone 201. In this case, when detecting the distance between the smart screen 202 and the user, the smart screen 202 may collect biometric feature information (for example, the face information) of the user. Then, the smart screen 202 may send the face information to the cloud 200, to request application information that is of a member account (herein, the user account of the mobile phone 201) of a user corresponding to the facial information and that is in cloud data of each member account corresponding to the family account. In this way, when the user approaches the smart screen without carrying the electronic device, the smart screen 202 may still obtain application information that is set by the mobile phone of the user for sharing.

For example, still refer to FIG. 3b. The decision content presentation module of the smart screen 202 may obtain application information of the user from the mobile phone 201 or the cloud 200 when the distance between the user and the smart screen 202 meets the preset condition, for example, flight information and a video play record. In addition, with reference to the application information, the decision content presentation module of the smart screen 202 may determine a change of a display style of the AOD information based on a change of the distance between the user (or the mobile phone 201) and the smart screen 202. In addition, the AOD information display module of the smart screen 202 may display the AOD information in a screen-off interface of the smart screen 202 based on the display style and content that are determined by the decision content presentation module. In this way, as the distance between the user and the smart screen 202 changes, the content and the style of the AOD information of the smart screen 202 may be updated in real time.

For example, a change of the display style may include but is not limited to a change of a font size of the displayed AOD information, and/or a change of displayed AOD content (for example, an increase or a decrease of a quantity of applications, or different display granularities of application information of a same application), and the like.

In this way, the smart screen may determine a distance between the smart screen and the user or user equipment (for example, a mobile phone or a tablet) by using a distance sensing technology, and display the AOD information in the screen-off interface of the smart screen only when the distance is close enough. In addition, when the distance between the smart screen and the user or the user equipment changes, the smart screen may dynamically adjust the font size and the display content of the AOD information, to improve user experience.

For example, the smart screen 202 shown in FIG. 3a and FIG. 3b may periodically transmit a signal to detect the distance between the smart screen 202 and the user or the user equipment. In this case, when the smart screen 202 detects that the distance does not meet the preset condition, for example, the distance is greater than a threshold, the smart screen 202 may determine to cancel display of the AOD information in the screen-off interface, and continue to be in the screen-off state.

In this way, the smart screen may dynamically detect the distance between the smart screen and the user or the user equipment. When the distance is short, the smart screen may determine that the user has a high screen requirement for watching the smart screen, and display the AOD information in the screen-off interface. When the distance changes to a long distance, the smart screen may determine that the user has a low screen requirement for watching the smart screen, and cancel displaying the AOD information in the screen-off interface. In this way, the AOD information can be flexibly displayed based on a screen watching requirement of the user, to avoid light pollution and screen burn-in caused by constant display of the AOD information.

In addition, in this embodiment of this application, the AOD information displayed by the smart screen is application information that is concerned by the user and that is obtained from the peer end (for example, the mobile phone or the cloud). Therefore, not only local information (for example, a date and time) of the smart screen may be displayed as the AOD information, but also a common attribute of the smart screen may be considered, and application information can be obtained from the peer end in a cross-system manner and displayed as AOD information of the smart screen.

In a possible implementation, when a problem of an increase in power consumption of the mobile phone 201 is not considered, a function of determining the display style and the display content of the AOD information based on the distance by the decision content presentation module shown in FIG. 3b may alternatively be implemented by the electronic device at the peer end (for example, the mobile phone 201 in FIG. 3a). In this case, the mobile phone 201 may send determined to-be-displayed application information to the smart screen 202 based on a distance, a priority of an application, and an information priority of the application information, and does not need to send all preconfigured application information of a specified type of a specified application to the smart screen 202. This can reduce an amount of to-be-sent information. A specific decision-making policy implemented by the mobile phone is the same as an implementation of a decision-making policy of the smart screen. Details are not described herein again.

Certainly, in most scenarios, the large-screen smart screen 202 may determine the display style and the content of the AOD information through the decision content presentation module, to avoid a problem that power consumption is significantly increased because the mobile phone 201 performs decision making.

For example, as shown in FIG. 3b, the AOD information display module may further include the direct interaction module.

For example, the decision content presentation module may add, to AOD information of the audio/video application, a shortcut operation instruction for triggering corresponding application data. After receiving the shortcut operation instruction, the direct interaction module may turn on the screen of the smart screen 202, and display application data of an application corresponding to the shortcut operation instruction on the screen. In this process, one-tap direct access to the application data corresponding to the AOD information can be implemented. The user does not need to perform a complex operation of turning on the screen and then entering a home screen to perform an operation to display the application data. This can improve user interaction efficiency.

For example, the shortcut operation instruction may be an instruction corresponding to a physical button of a remote control of the smart screen, a specified voice instruction, or the like. An implementation of the shortcut operation instruction is not limited in this application.

It should be understood that FIG. 3b is an example diagram of the structure. It should be understood that the structure shown in FIG. 3b is merely an example. The smart screen in this application or another electronic device used as the local end may have more or fewer components than those shown in the figure, two or more components may be combined, or there may be different component configurations. Various components shown in FIG. 3b may be implemented in hardware including one or more signal processing circuits and/or application-specific integrated circuits, software, or a combination of hardware and software.

For example, there may be one or more peer ends in this application. In other words, the method in this application may be applied to a scenario in which a single person approaches the smart screen, or may be applied to a scenario in which a plurality of persons approach the smart screen successively or simultaneously.

The following separately describes the method in this application with reference to the scenario in which a single person approaches the smart screen and the scenario in which a plurality of persons approach the smart screen.

### Example 1: scenario in which a single person approaches the smart screen

In this example, an implementation process of the method in this application may be understood with reference to FIG. 3a to FIG. 3c, FIG. 4a, and FIG. 5a to FIG. 5c(3).

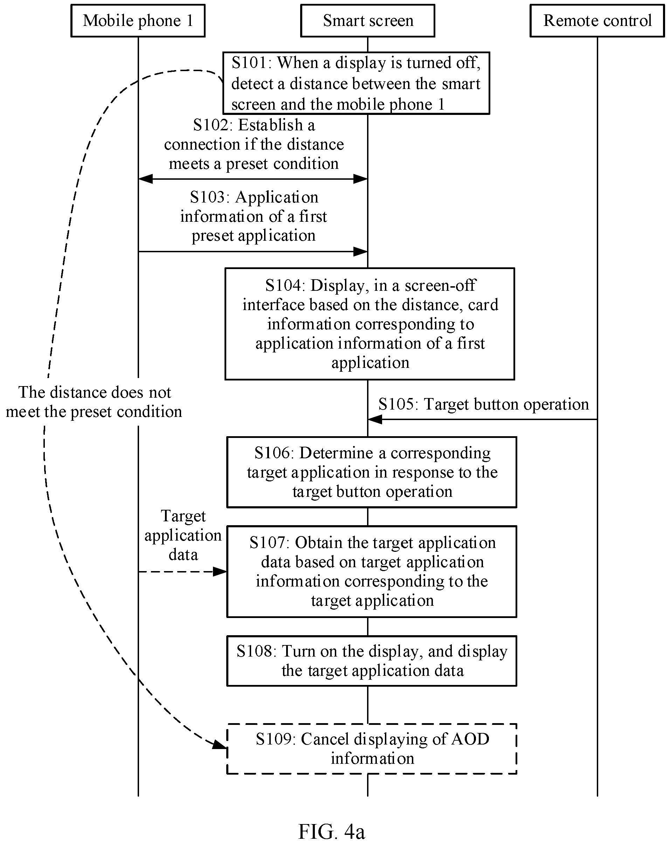

For example, as shown in FIG. 4a, the method may include the following steps.

S101: When a display is turned off, the smart screen detects a distance between the smart screen and a mobile phone 1.

For example, when the display of the smart screen is turned off, the smart screen is in a screen-off state.

For example, when the smart screen is in the screen-off state, the smart screen may transmit a distance detection signal in real time or periodically, to detect a distance between the smart screen and an electronic device (or a user).

In this case, S101 is not performed only once before S102. When the smart screen is in the screen-off state, the smart screen may periodically perform S101.

S102: When determining that the distance between the smart screen and the mobile phone 1 meets a preset condition, the smart screen establishes a connection to the mobile phone 1.

For example, when determining that the distance meets the preset condition, the smart screen may determine that the user has an intent to watch the smart screen, and obtain application information of the smart screen from the mobile phone 1.

It should be understood that, in this application, the step of detecting a distance between the smart screen and another electronic device or the user by the smart screen and detecting whether the distance meets the preset condition and the step of establishing a connection to the another electronic device by the smart screen is not subject to an execution sequence. For example, the smart screen may alternatively establish the connection to the mobile phone 1 before S101.

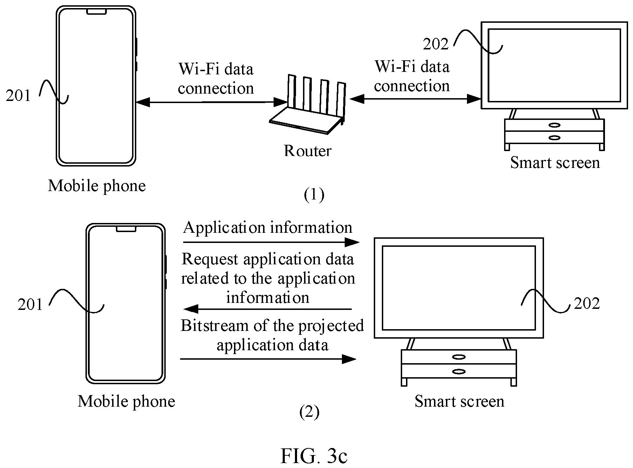

For example, as shown in FIG. 3c(1), when the smart screen determines that the distance between the smart screen and the mobile phone 1 meets the preset condition, the smart screen 202 may establish a Wi-Fi data connection to the mobile phone 201 (the mobile phone 1 herein) through a router.

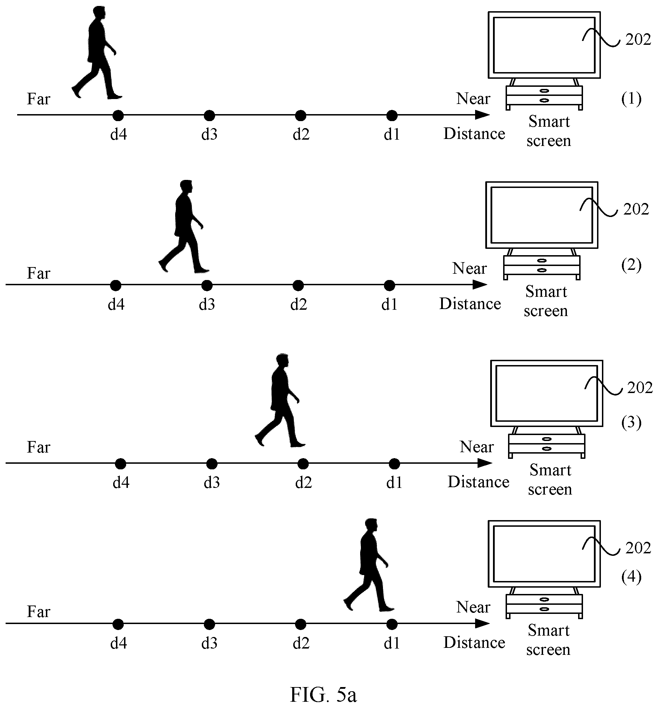

In a possible implementation, when determining that a detected distance is less than or equal to a preset threshold (for example, d4 in FIG. 5a), the smart screen may determine that the distance meets the preset condition.

In this way, when the user approaches the smart screen and is within a specific distance from the smart screen, the smart screen may determine that the user has an intent to watch the smart screen, and establish a connection to a mobile phone of the user, to obtain corresponding application data.

In a possible implementation, when determining that a detected distance is greater than the preset threshold (for example, d4 in FIG. 5a), the smart screen may determine that the distance does not meet the preset condition.

In a possible implementation, to improve accuracy of determining a user intent, the smart screen not only needs to detect whether a distance is less than or equal to the preset threshold, but also needs to determine, with reference to a change of the distance with time (for example, a change of a speed and/or a change of an acceleration), whether the distance meets the preset condition.

For example, the smart screen determines that the distance is less than or equal to the preset threshold, and a moving speed of the mobile phone 1 decreases with time relative to that of the smart screen (the moving speed may continuously or discontinuously decrease, and this is not limited herein, for example, the acceleration decreases). In this case, the smart screen may determine that the distance meets the preset condition.

For example, the smart screen determines that the distance is less than or equal to the preset threshold, the moving speed of the mobile phone 1 decreases with time, and the distance decreases with time (which indicates that the mobile phone 1 is approaching the smart screen). In this case, the smart screen may determine that the distance meets the preset condition.

In this implementation, when the distance between the user holding the mobile phone 1 and the smart screen is less than a specific distance, in a scenario in which the user moves close to the smart screen and a moving speed decreases until the user stops, the smart screen may detect the distance and a change of the distance with time, to accurately identify that the user has an intent to watch the smart screen.

For example, the mobile phone 1 is placed near the smart screen for charging. Although a distance between the mobile phone 1 and the smart screen is less than the preset threshold, the distance between the mobile phone 1 and the smart screen does not change with time. In this case, the smart screen may determine that the distance does not meet the preset condition. Therefore, this case may be filtered out by using the method in this implementation, to improve accuracy of identifying the intent of the user to watch the smart screen.

For another example, when the distance between the mobile phone 1 and the smart screen is less than the preset threshold, and the moving speed of the mobile phone 1 decreases with time (for example, the acceleration decreases), but the distance increases with time (which indicates that the mobile phone 1 is moving away from the smart screen), it indicates that the user keeps holding the mobile phone 1 away from the smart screen. In this case, the smart screen may determine that the detected distance between the smart screen and the mobile phone 1 does not meet the preset condition, and determine that the user has a low requirement for watching the smart screen or does not have an intent to watch the smart screen.

For another example, when the distance between the mobile phone 1 and the smart screen is less than the preset threshold, the smart screen detects that the moving speed of the mobile phone 1 relative to the smart screen is constant (which may also be described as that the acceleration is unchanged) or accelerating (which may also be described as the acceleration is increasing), it indicates that the user holds the mobile phone 1 and passes near the smart screen. In this case, the smart screen may determine that the detected distance between the smart screen and the mobile phone 1 does not meet the preset condition, and determine that the user has a low requirement for watching the smart screen or does not have an intent to watch the smart screen.

S103: The smart screen obtains application information of a first preset application from the mobile phone 1.

For example, as shown in FIG. 3c(2), the smart screen 202 may obtain the application information of the first preset application from the mobile phone 201 through the established Wi-Fi data connection.

As described in embodiments in FIG. 3a and FIG. 3b, the mobile phone may set, in a pre-configuration manner or a user-defined or extended manner, the application information of the specified type of the specified application as the application information that can be shared to the large-screen electronic device (for example, the smart screen 202 herein). In this case, the application information of the first preset application herein may be application information that is defined by the user of the mobile phone 201 (herein, the mobile phone 1) and that is considered by the user to be important and that needs to be shared on the large screen.

For example, there may be one or more first preset applications. There may be one or more pieces of application information of each first preset application. This is not limited in this application.

For example, the application information shared by the mobile phone 1 to the smart screen is updated latest application information of a specified message type of each first preset application.

In a possible implementation, after S103, when the application information of the first preset application is updated, the mobile phone 1 may synchronize updated application information of the corresponding preset application to the smart screen in real time. In this way, when the smart screen displays AOD information based on the application information from the mobile phone 1, the AOD information may be synchronized with the information from the mobile phone 1 in real time.

In this embodiment of this application, the smart screen may sense that the user approaches the smart screen, wake up the AOD information display module shown in FIG. 3b when the distance between the user and the smart screen meets the preset condition, and synchronize the application information of the specified application of the mobile phone to the smart screen as AOD information for display, so that cross-system display of the AOD information can be supported.

S104: The smart screen displays, in the screen-off interface based on the distance between the smart screen and the mobile phone 1, card information corresponding to application information of a first application.

For example, the card information is displayed in the screen-off interface of the smart screen as AOD information.

It should be understood that a manner of displaying the AOD information is not limited to a card manner in this application. This is not limited herein.

For example, the distance in S104 is a current distance between the smart screen and the mobile phone 1.

For example, the smart screen may periodically detect the distance between the smart screen and the mobile phone 1. When the distance changes, in S104, the smart screen may update, based on a changed distance, the AOD information displayed in the screen-off interface. In this way, when the distance between the user and the smart screen changes within a specific distance range, the AOD information displayed on the smart screen may accordingly change.

For example, there may be one or more first applications in S104. In this case, the AOD information of the smart screen may include application information of one or more applications.

For example, the first application may include some or all of the first preset applications shared by the mobile phone 1.

For example, the first application includes an application in the first preset application, and it is considered that the mobile phone 1 may share application information of a plurality of message types of a same application with the smart screen. In this case, the application information that is of the first application and that is displayed by the smart screen as AOD information may be application information of all specified types of the first application, or may be application information of some specified types of the first application. In this case, the AOD information of the smart screen may include one or more pieces of application information of a same application.

For example, the first application may alternatively be or include a local application of the smart screen that is different from the first preset application, for example, a clock application or a weather application.

For example, a correspondence between a distance threshold and an AOD template may be set on the smart screen.

For example, different AOD templates may have different content display styles such as font sizes and colors, and/or different application information granularities.

For example, that application information has different granularities may include but is not limited to: AOD information corresponds to different quantities of applications, and card information of a same application corresponds to different application content.

For example, that application content is different may be that quantities of pieces of application information of a same application are different, and/or an amount of information content of same application information is different

For example, a longer distance between the smart screen and the mobile phone 1 indicates a larger font and a brighter color of AOD information corresponding to an AOD template, so that the user clearly watches screen content on the smart screen at a long distance.

For another example, a shorter distance between the smart screen and the mobile phone 1 indicates a larger quantity of applications in AOD information corresponding to an AOD template, so that the user can watch card information of more applications on the screen of the smart screen at a short distance.

For another example, a shorter distance between the smart screen and the mobile phone 1 indicates a more refined granularity of application content corresponding to card information of a same application in AOD information corresponding to an AOD template.

For example, for a video application X, when the mobile phone 1 is far away from the smart screen, card information of the video application X in AOD information includes only name information of a video recently played by the video application X. When the distance between the mobile phone 1 and the smart screen changes to a short distance, the card information of the video application X in the AOD information may not only include the name information of the recently played video, but also include application information such as update progress information of the video. Therefore, when the distance is short, the AOD information corresponding to the video application X not only includes play record information, but also may include update information of the corresponding video.

For example, the smart screen may use, based on a distance and the foregoing correspondence, an AOD template corresponding to the distance, and fill corresponding application information, to generate card information in the AOD information for display.

In this embodiment of this application, the AOD template may be selected based on the distance threshold, so that when the distance between the user or the electronic device of the user and the smart screen changes, a display style (for example, a font size or a font color) of the AOD information may change, a granularity of application content of the AOD information may also change (for example, a quantity of applications may change, and an amount and content of application information displayed for a same application may change).

The following describes a specific implementation process of S104 with reference to FIG. 5a to FIG. 5b(4).

For example, FIG. 5a shows an example of a change of a distance between a user 1 holding the mobile phone 1 and the smart screen 202, and the user approaches the smart screen 202 from a distant location. As shown in FIG. 5a, four distance thresholds are shown on a distance axis, and are respectively d4, d3, d2, and d1 from far to near to the smart screen 202.

For example, a distance D is used to represent the current distance between the mobile phone 1 and the smart screen.

The following briefly shows a correspondence between distance thresholds (d4, d3, d2, and d1 herein) of the smart screen and AOD templates.

d3<D≤d4 corresponds to a template 1. For example, the template 1 includes only common information such as a clock and weather, but does not include application information of an account of the mobile phone 1.

d2<D≤d3 corresponds to a template 2. For example, compared with the template 1, the template 2 has card information of an application, and has a different style.

d1<D≤d2 corresponds to a template 3. For example, compared with the template 2, the template 3 displays content of the card information at a more refined granularity.

D≤d1 corresponds to a template 4. For example, compared with the template 3, the template 4 has shortcut instruction prompt information, to have a more refined content display granularity.

It should be understood that the correspondence between the distance thresholds and the AOD templates is merely an example. In this application, the distance thresholds in the correspondence may be user-defined based on a user requirement. In addition, information about the AOD templates may alternatively be configurable and user-defined.

A plurality of distance thresholds shown in FIG. 5a may be set for the smart screen in this application, so that when the distance between the user or the mobile phone of the user and the smart screen changes, an information granularity and a display style of the AOD information of the smart screen may be different.

For example, as shown in FIG. 5a, the distance threshold d4 may be 4 meters, d3 may be 3 meters, d2 may be 2 meters, and d1 may be 1 meter. It should be understood that an arrangement manner of the distance thresholds is not limited to an arithmetic progression in this application, and a value relationship between the distance thresholds may be flexibly set based on a user requirement. This is not limited in this application.

The following describes a change process of the AOD information with reference to FIG. 5a to FIG. 5b(4).

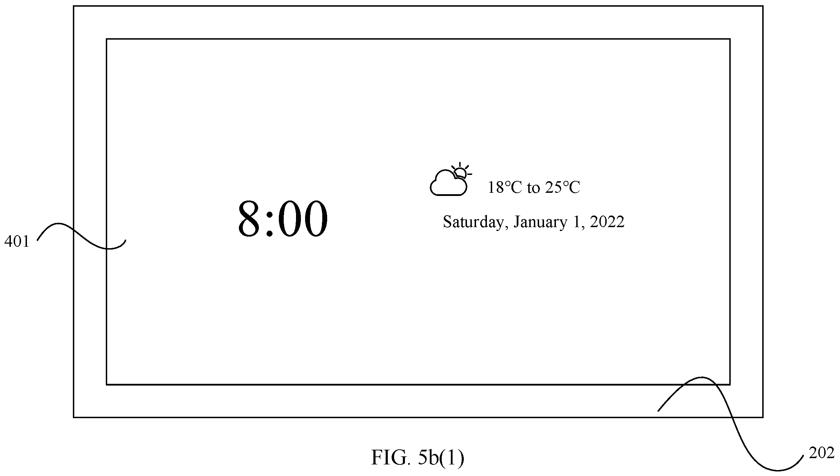

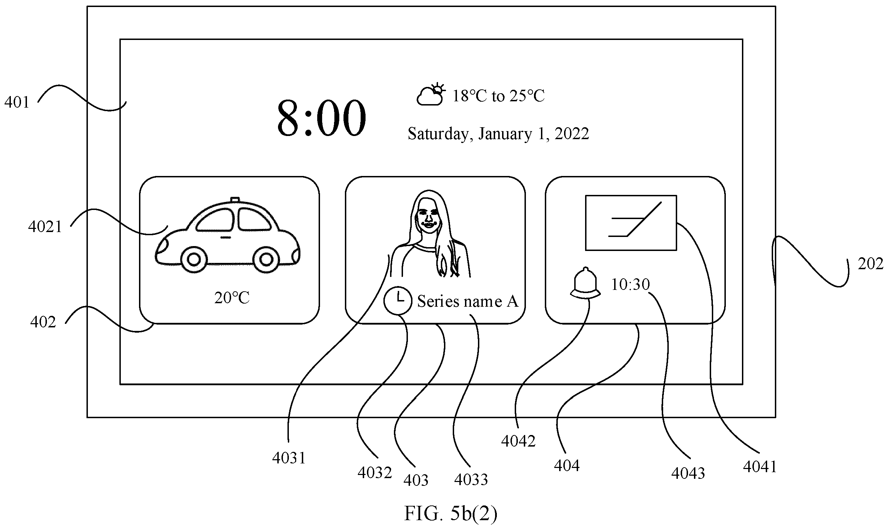

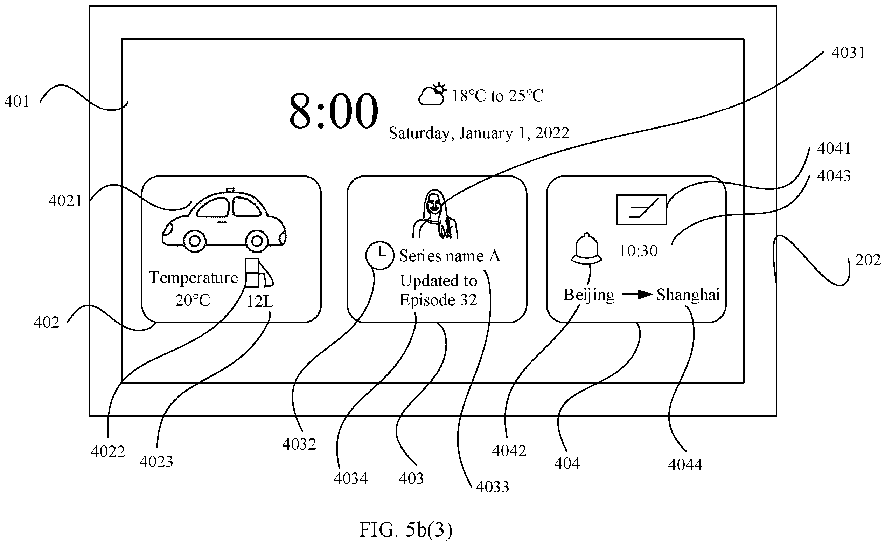

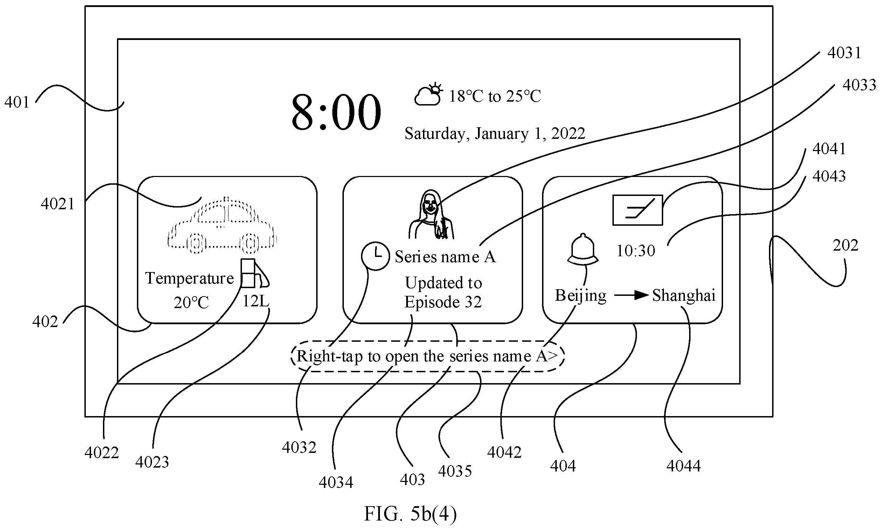

As shown in (1) in FIG. 5a, the user 1 walks towards the smart screen 202, causing the distance between the mobile phone 1 (namely, the mobile phone 201 in FIG. 3c) of the user 1 and the smart screen 202 to be d4. In this case, the smart screen 202 starts to display the AOD information in the screen-off state of the screen. As shown in FIG. 5b(1), the smart screen 202 may display clock information (the clock information herein includes Saturday, January 1, 2022, 8:00) and weather information (the weather information herein includes a cloudy icon and temperature information (18°C to 25°C)) in a screen-off interface 401.

For example, when displaying the AOD information shown in (1) in FIG. 5a, the smart screen 202 may play the clock information and the weather information in the screen-off interface 401 in an animation manner when the distance between the user 1 and the smart screen 202 is d4.

As shown in (1) in FIG. 5a, the distance between the mobile phone 1 of the user 1 and the smart screen 202 is d4, and the user 1 continues to approach the smart screen. In this case, (1) in FIG. 5a changes to (2) in FIG. 5a. As shown in (2) in FIG. 5a, the distance between the mobile phone 1 and the smart screen may change from d4 shown in (1) in FIG. 5a to d3. In this case, when the smart screen 202 detects that the distance between the smart screen 202 and the mobile phone 1 is d3, the smart screen 202 may switch, based on the template 2, display content in the screen-off interface 401 from display content in the screen-off interface 401 shown in FIG. 5b(1) to display content in the screen-off interface 401 shown in FIG. 5b(2).

For example, when the screen-off interface of the smart screen 202 is switched from FIG. 5b(1) to FIG. 5b(2), the AOD information in the screen-off interface 401 may be switched in an animation manner.

For example, FIG. 5b(1) is compared with FIG. 5b(2). As shown in FIG. 5b(2), font sizes of the clock information and the weather information in the screen-off interface 401 are smaller than font sizes shown in FIG. 5b(1).

The application information of the first preset application obtained by the smart screen from the mobile phone 1 in S103 in FIG. 3a is used as an example.

For example, the first preset application may include the video application X and the ticket booking application. For example, the application information of the first preset application may include the play record information (for example, record information such as a video name of at least one recently played video and play progress of the video) and progress update information of a video corresponding to a play record (for example, an episode number to which the video has been updated) of the video application X, and flight booking information (for example, a departure place, a destination, departure time, arrival time, and a flight name) of the ticket booking application.

For example, as shown in FIG. 5b(2), the smart screen 202 may display the application information of the first application in the screen-off interface 401. For example, the first application may not only include the clock application and the weather application, but also include the video application X and the ticket booking application. For example, a card 402 shown in FIG. 5b(2) may correspond to information about a vehicle application, or may be device information of a common electronic device (which is an intelligent cockpit herein). For example, as shown in FIG. 5b(2), the AOD information displayed by the smart screen 202 in the screen-off interface 401 may not only include clock information of the clock application and weather information of the weather application, but also include application information displayed on the card 402, a card 403, and a card 404. A control type of any one of the foregoing cards is not limited in this application.

For example, as shown in FIG. 5b(2), vehicle information corresponding to the card 402 may be vehicle information that corresponds to an account of the smart screen and that is synchronized by the smart screen 202 from the cloud, or may be vehicle information obtained by the smart screen 202 from the mobile phone 1 in S103. This is not limited in this application. For example, as shown in FIG. 5b(2), the card 402 includes an image 4021 of a vehicle and a current temperature of the vehicle, for example, 20°C. In this way, the smart screen 202 may display information about a vehicle of a family in the screen-off interface 401.

Certainly, in a smart home scenario, each smart device may log in to a same account. In this case, the smart screen 202 may also obtain, from the cloud or the mobile phone 1, information about another common electronic device corresponding to the family account, and display the information as card information. For example, the another common electronic device may not only be a vehicle, but also include but is not limited to a smart oven, a smart speaker, a smart lock, and the like.

In this case, the card information displayed on the smart screen 202 in this application is not limited to the application information obtained from the mobile phone 1, and may further include common information (for example, information such as weather, a date, humidity, and a temperature) unrelated to private information of the account of the mobile phone 1, and/or device status information of an electronic device that has a common attribute and that corresponds to the account of the smart screen 202 (for example, countdown time information of a smart oven with a common attribute, and current barbecue temperature information of the oven), which may also be displayed in the screen-off interface 401 as card information.

For example, in the scenario in which a mobile phone of a single person is connected to the smart screen in Example 1, a priority of the application information obtained by the smart screen 202 from the mobile phone 1 may be higher than a priority of the common information obtained by the smart screen 202 from the cloud. When a quantity of cards in the screen-off interface 401 of the smart screen 202 is limited, the smart screen 202 may preferentially display, in the screen-off interface, the application information of the mobile phone 1 with the higher priority.

In the scenario in FIG. 5b(1) to FIG. 5b(4), the smart screen 202 obtains application information of only two applications (for example, the video application X and the ticket booking application) from the mobile phone 1. In this case, the application information of the two applications is respectively displayed by using the card 403 and the card 404 shown in FIG. 5b(2). In this case, the remaining card 402 displays information about a vehicle having a common attribute.

Still refer to FIG. 5b(2). The card 403 is a card corresponding to the application information of the video application X of the mobile phone 1. As described above, the smart screen 202 may obtain the play record information of the video application X from the mobile phone 1. For example, the play record information includes information such as a name (a series name A herein) of a television series recently played by the user 1 of the mobile phone 1 and play progress of the television series. In addition, the smart screen 202 may further obtain, from the mobile phone 1, information about an episode number to which the television series with the series name A has been updated.

For example, when the distance D between the mobile phone 1 and the smart screen 202 is greater than d2 and less than or equal to d3, the card 403 of the smart screen 202 may include but is not limited to: a poster image 4031 of the television series with the series name A, an icon 4032 indicating that the television series has been played recently, and a control 4033 indicating the series name of the television series.

For example, as shown in FIG. 5b(2), the card 404 is a card corresponding to the flight booking information of the ticket booking application of the mobile phone 1. As described above, the smart screen 202 may obtain the flight booking information (for example, the departure place, the destination, the departure time, the arrival time, and the flight name) of the ticket booking application from the mobile phone 1.

For example, when the distance D between the mobile phone 1 and the smart screen 202 is greater than d2 and less than or equal to d3, the card 404 of the smart screen 202 may include but is not limited to: an image 4041 indicating information about a booked ticket, a control 4042 indicating a reminder, and a control 4043 indicating the departure time (10:30 herein).

For example, as shown in (2) in FIG. 5a, if the distance between the mobile phone 1 of the user 1 and the smart screen 202 is d3, the smart screen 202 displays the screen-off interface 401 shown in FIG. 5b(2). Then, the user 1 continues to approach the smart screen, and the smart screen changes from (2) in FIG. 5a to (3) in FIG. 5a. As shown in (3) in FIG. 5a, the distance between the mobile phone 1 and the smart screen may change from d3 shown in (2) in FIG. 5a to d2. In this case, when the smart screen 202 detects that the distance between the smart screen 202 and the mobile phone 1 is d2, the smart screen 202 may switch, based on the template 3, the display content in the screen-off interface 401 from the display content in the screen-off interface 401 shown in FIG. 5b(2) to display content in the screen-off interface 401 shown in FIG. 5b(3).

For example, when the screen-off interface of the smart screen 202 is switched from FIG. 5b(2) to FIG. 5b(2), the AOD information in the screen-off interface 401 may be switched in an animation manner. A specific type of the animation is not limited herein.

For example, FIG. 5b(2) is compared with FIG. 5b(3). As shown in FIG. 5b(3), because more application content with a more refined granularity needs to be displayed in each card in the screen-off interface 401, sizes of the card 402, the card 403, and the card 404 remain unchanged. However, a size of the image 4021 in the card 402 in the screen-off interface 401 is smaller than a size of the image 4021 shown in FIG. 5b(2). As shown in FIG. 5b(3), a size of the poster image 4031 in the card 403 in the screen-off interface 401 is smaller than a size of the poster image 4031 shown in FIG. 5b(2). As shown in FIG. 5b(3), a size of the image 4041 in the card 404 in the screen-off interface 401 is smaller than a size of the image 4041 shown in FIG. 5b(2). Certainly, this is merely an example of a size change. The smart screen 202 may alternatively adjust sizes of the card 402, the card 403, and the card 404 based on a distance change.

In FIG. 5b(1) to FIG. 5b(4), sizes of the card 402, the card 403, and the card 404 are the same. It should be understood that whether sizes of different cards are the same is not limited in this application.

For example, FIG. 5b(2) is compared with FIG. 5b(3). As shown in FIG. 5b(3), more application content with a more refined granularity may be displayed in each card in the screen-off interface 401.

For example, as shown in FIG. 5b(3), more vehicle information is displayed in the card 402. For example, the card 402 further includes a "Temperature" text, a picture 4022 indicating a fuel volume, and a control 4023 indicating a remaining fuel volume (display content of the control 4023 herein is 12 L).

For example, as shown in FIG. 5b(3), more application information of the video application X is displayed in the card 403. For example, the card 403 further includes a control 4034, where information indicating the episode number to which the TV series with the series name A has been updated is displayed on the control 4034, and "Updated to Episode 32" herein indicates that the TV series is updated to Episode 32.

For example, as shown in FIG. 5b(3), more information about the ticket booking application is displayed in the card 404. For example, the card 404 further includes a control 4044, where information indicating the departure place and the destination of the flight booked by the user 1 is displayed on the control 4044, and the flight is from Beijing to Shanghai herein.

For example, as shown in (3) in FIG. 5a, if the distance between the mobile phone 1 of the user 1 and the smart screen 202 is d2, the smart screen 202 displays the screen-off interface 401 shown in FIG. 5b(3). Then, the user 1 continues to approach the smart screen, and the smart screen changes from (3) in FIG. 5a to (4) in FIG. 5a. As shown in (4) in FIG. 5a, the distance between the mobile phone 1 and the smart screen may change from d2 shown in (3) in FIG. 5a to d1. In this case, when the smart screen 202 detects that the distance between the smart screen 202 and the mobile phone 1 is d1, the smart screen 202 may switch, based on the template 4, the display content in the screen-off interface 401 from the display content in the screen-off interface 401 shown in FIG. 5b(3) to display content in the screen-off interface 401 shown in FIG. 5b(4).

For example, when the screen-off interface of the smart screen 202 is switched from FIG. 5b(3) to FIG. 5b(4), the AOD information in the screen-off interface 401 may be switched in an animation manner. A specific type of the animation is not limited herein.

For example, FIG. 5b(3) is compared with FIG. 5b(4). As shown in FIG. 5b(4), a control 4035 is displayed below the card 403. For example, the smart screen may add, to the video application X corresponding to the card 403, remote control button interaction prompt information shown by the control 4035. For example, the control 4035 may indicate that a shortcut operation instruction is set for the video application X corresponding to the card 403, and indicate a user operation of triggering the shortcut operation instruction. For example, the control 4035 displays information about "Right-tap to open the series name A". It should be understood that a dashed-line box of the control 4035 indicates the control, and the dashed-line box is not displayed in the screen-off interface 401.

For example, the shortcut operation instruction that is set by the smart screen 202 for the application corresponding to the application information shared by the mobile phone 1 may also belong to application content of a more refined granularity of the application.

In a possible implementation, when the smart screen 202 detects that the user 1 corresponding to the mobile phone 1 sits down, it indicates that an intent of the user is to immediately watch application content shared by the mobile phone to the smart screen. In this case, the smart screen may display prompt information of a shortcut operation instruction of a corresponding application in the AOD information in the screen-off interface.

It should be understood that, in the correspondence between the distance thresholds and the AOD templates that is set by the smart screen, a quantity of distance thresholds is not limited to the four distance thresholds (d1, d2, d3, and d4) shown in FIG. 5a, and there may be at least two distance thresholds. A specific quantity may be flexibly configured based on a requirement. This is not limited in this application.

In addition, in the scenarios in FIG. 5a to FIG. 5b(4), when the smart screen 202 detects that the distance between the smart screen 202 and the mobile phone 1 changes from d2 to d1, the screen-off interface 401 of the smart screen 202 may also be switched from FIG. 5b(3) to a screen-off interface that can display application content of a more refined granularity. Information in each card in the screen-off interface after switching may be more than that in FIG. 5b(3). Alternatively, there may be more cards. FIG. 5b(1) to FIG. 5b(4) are merely an example, and is not intended to limit the smart screen in this application to change the display style and the display content of the AOD information in the screen-off interface based on the distance.

It should be understood that, when the distance between the mobile phone 1 and the smart screen 202 is less than or equal to d4, a shorter distance indicates more display content in the AOD information and/or a more refined granularity of the display content, any change solution of the AOD information that meets the condition falls within the protection scope of this application.

In this embodiment of this application, it is considered that when the user is at different distances from the smart screen, a density of information to which the user pays attention is different, the smart screen may update an information density in the AOD information of the smart screen in real time based on the distance between the user and the smart screen. A shorter distance indicates a higher information density, to improve user experience. In addition, the smart screen may further adjust the display style of the AOD information based on a distance change, to display the AOD information in different styles at different distances. In this application, the display style is not displayed, and may be a font size, a word color, a picture change, an information layout, or the like.

For example, a change of the information density may include but is not limited to a change of an amount of content, a change of content fineness, and the like.

For example, in this embodiment, an application corresponding to the card information displayed by the smart screen in the screen-off interface may be referred to as the first application, and an application corresponding to the application information obtained by the smart screen from the mobile phone 1 may be referred to as the first preset application.

For example, still return to FIG. 3a. In S104, the smart screen may determine, based on the distance between the smart screen and the mobile phone 1, a first application corresponding to card information to be displayed in the screen-off interface. In this case, when the smart screen determines that the first application corresponding to the to-be-displayed card information includes an audio/video application, for example, the first preset application may include the audio/video application, the smart screen may allocate a shortcut operation instruction to the audio/video application, where the shortcut operation instruction may be used to trigger playing of application data associated with application information (application information shared from the mobile phone 1) of the audio/video application.

For example, it is considered that when the AOD information includes card information of the audio/video application, the user may need to further operate the audio/video application. To improve operation efficiency of the audio/video application, the smart screen in this application may allocate the shortcut operation instruction to the audio/video application (but this is not limited to the audio/video application, and may also include another type of application. This is not limited in this application, and a principle is similar).

For example, the shortcut operation instruction may be an instruction corresponding to a physical button of a remote control of the smart screen, a specified voice instruction, or the like. This is not limited in this application.

For example, the remote control of the smart screen supports four physical buttons: up, down, left, and right. The smart screen may select an instruction of a different physical button based on a quantity of audio/video applications corresponding to card information that needs to be displayed in the AOD information, and allocate the instruction to the corresponding audio/video application.

For example, the step of allocating, by the smart screen, the shortcut operation instruction to the audio/video application may be performed after the smart screen determines that the card information of the audio/video application needs to be displayed. For example, the step of allocating the shortcut operation instruction may be performed in a process of S104, or after S104 and before S105. This is not limited in this application. For example, in the scenario in FIG. 5b(1) to FIG. 5b(4), the step of allocating the shortcut operation instruction may be performed before or after the card 403 shown in FIG. 5b(2) is displayed.

It should be understood that content and a manner of the shortcut operation instruction allocated by the smart screen to the audio/video application are not limited in this application.

In a possible implementation, each time the smart screen connects to the mobile phone or shares application information from the cloud, the smart screen may allocate, in real time, a shortcut operation instruction to an audio/video application corresponding to the application information. For example, when the smart screen is connected to the mobile phone 1, a left button is allocated to the video application X, and when the smart screen is connected to a mobile phone 2, a right button may be allocated to the video application; and/or in a scenario in which the smart screen is connected to the mobile phone 1 for a plurality of times, physical buttons allocated to the same video application X after each connection may be the same or different.

In another possible implementation, before establishing a connection to any electronic device or sharing application information from the cloud, the smart screen may pre-allocate a shortcut operation instruction to at least one specified audio/video application. In this way, after different electronic devices are connected to the smart screen and share application information, for a same audio/video application, users trigger one-tap direct access of the audio/video application by using a same shortcut operation instruction

S105: The smart screen receives an operation on a target button of the remote control of the smart screen.

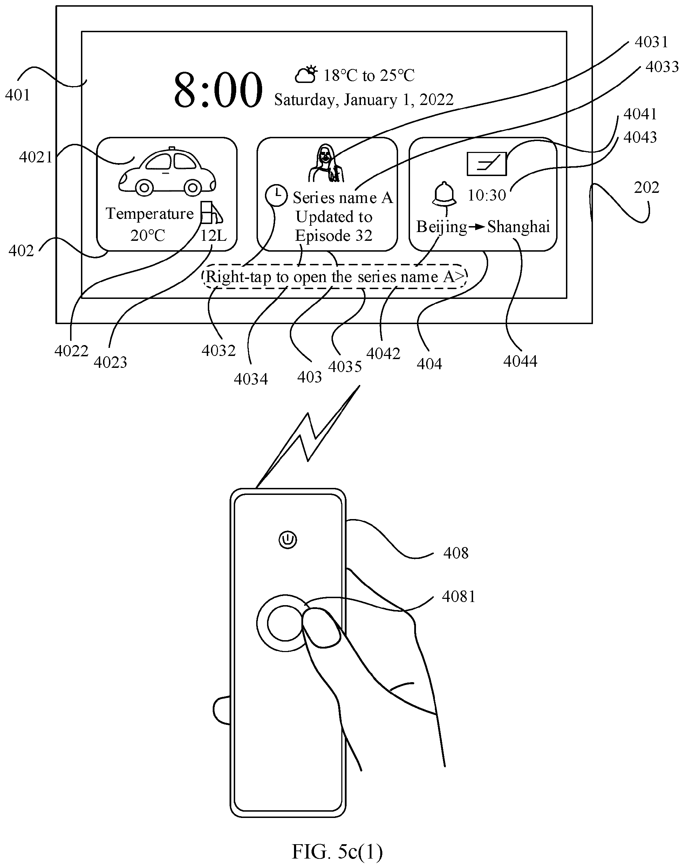

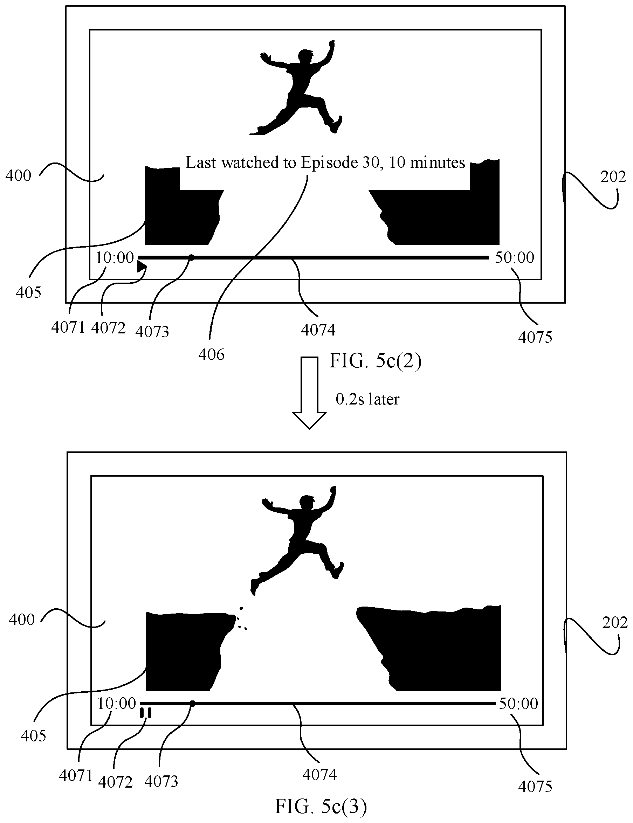

For example, refer to FIG. 5b(4). As shown in FIG. 5c(1), a remote control 408 of the smart screen 202 may be connected to the smart screen 202 through Bluetooth. A specific connection manner is not limited. The user taps a right button 4081 of the remote control 408 based on the prompt information of the control 4035 displayed in the screen-off interface 401. In this case, the smart screen 202 may receive an operation instruction corresponding to the right button 4081.

S106: The smart screen determines a corresponding target application in response to the operation on the target button.

For example, the smart screen 202 shown in FIG. 5c(1) to FIG. 5c(3) may respond to the received operation instruction corresponding to the right button 4081 based on a preset correspondence between at least one audio/video application and a shortcut operation instruction, where the correspondence is a one-to-one correspondence, to determine the video application X (an example of the target application) corresponding to the operation instruction of the right button 4081.

S107: The smart screen obtains target application data based on target application information corresponding to the target application.

S108: The smart screen turns on the display, and displays the target application data.

For example, if the target application is an audio/video application, the target application data may be an audio/video stream.

For example, the target application is one of the first applications in S104.

For example, the smart screen may obtain application information (namely, the target application information) of the target application in S103 shown in FIG. 4a. In this case, the target application data may be application data associated with the application information of the target application.

For example, in the scenario in FIG. 5b(1) to FIG. 5b(4), the smart screen 202 obtains the application information of the video application X from the mobile phone 1, where the application information may include the play record information of the video application X. The play record information includes information such as the name (the series name A herein) of the TV series recently played by the user 1 of the mobile phone 1 and the play progress of the TV series. In addition, the application information may further include information about the episode number to which the TV series with the series name A has been updated.

Optionally, for the audio/video application (which is not limited to an audio/video application, and may be an application of any type), the application information sent by the mobile phone 1 to the smart screen may further include uniform resource locator (Uniform Resource Locator, URL) information of an audio/video play interface related to the application information of the audio/video application. In this way, the smart screen may display the audio/video play interface through the URL.

For example, the URL information may be deeplink (deeplink) information.

For example, the deeplink information may include action information (for example, opening an application), application starting manner information (for example, a manner of opening a local application through a system), and information that indicates a specific application interface in an application (for example, the specific application interface herein is a specific audio/video play interface).

In a possible implementation, if the target application is locally installed on the smart screen, the smart screen may obtain the target application data from a server of the target application.

For example, the video application X corresponding to the card 403 is installed on the smart screen 202 shown in FIG. 5b(1) to FIG. 5c(3). In this case, the smart screen 202 may determine, based on URL information (for example, deeplink information) of the video application X in the application information shared by the mobile phone 1, to open a video play interface associated with application information in the card 403, for example, an interface 400 shown in FIG. 5c(2).

For example, when the video application X has been installed on the smart screen 202, the smart screen 202 may open the local video application X through a system based on the deeplink information carried in the application information corresponding to the card 403, the video application X opens an application internal page indicated by the deeplink information. Herein, the application internal page is the video play interface. For example, in the scenario in FIG. 5c(1) to FIG. 5c(3), the video play interface is the interface 400 shown in FIG. 5c(2) or the interface 400 shown in FIG. 5c(3), to implement an effect of directly accessing an internal interface of the application from a link.

For example, the video application X may obtain a video stream of corresponding play progress from a video server based on information about the application internal page (which is the video play interface herein) indicated by the deeplink information, to play video data from the corresponding play progress in the video play interface, to implement one-tap access to the video data. A one-tap direct access process of an audio application is similar to the process described herein for the video application X, and details are not described herein again.

In another possible implementation, as shown in a dashed-line step in FIG. 4a, the target application (herein, the video application X corresponding to the card 403 in FIG. 5c(1) to FIG. 5c(3)) is not locally installed on the smart screen 202. In this case, the smart screen may obtain the target application data from the mobile phone 1.

For example, as shown in FIG. 3c, the smart screen 202 may request, from the mobile phone 201 through the Wi-Fi data connection, application data related to the application information of the video application X. For example, the smart screen 202 may use a deeplink in the application information of the video application X as a parameter, to request the mobile phone 201 to play the video stream in the video play interface indicated by the deeplink.

For example, as shown in FIG. 3c, the mobile phone 201 may establish a projection connection to the smart screen 202 in response to a play request of the smart screen 202 for the video stream. In addition, the mobile phone 201 may open the locally installed video application X based on the deeplink in a manner similar to that of the smart screen 202, and the video application X opens the video play interface specified by the deeplink. Then, the mobile phone 201 may send, to the smart screen 202 by using a projection protocol, a bitstream (an example of a bitstream of target application data on which projection is performed) played in the video play interface. The video play interface is a video play interface of corresponding play progress of a video whose series name is "Series name A". In this way, the smart screen 202 may obtain the target application data from the mobile phone 1 (which is also referred to as the mobile phone 201) for display.

In another scenario, as shown in FIG. 3a, the user 1 the mobile phone 201 (which is also referred to as the mobile phone 1) approaches the smart screen, so that the smart screen 202 obtains, from the cloud, the application information of the first preset application of the user 1 of the mobile phone 201. In this scenario, when the target application is locally installed on the smart screen, the smart screen may obtain the target application data from the server of the target application. A specific implementation principle is the same as a principle of an implementation process in which the smart screen 202 obtains the target application data from the server when the target application is installed on the smart screen 202 described in the foregoing embodiment. Details are not described herein again.

The following describes implementation processes of S107 and S108 with reference to the scenario in FIG. 5c(1) to FIG. 5c(3).

For example, as shown in FIG. 5c(1), the user taps the right button 4081 of the remote control 408, and the smart screen 202 switches the display of the smart screen 202 from the screen-off state to the screen-on state in response to the user operation, and displays the interface 400 shown in FIG. 5c(2) in the screen-on state.

For example, as shown in FIG. 5c(2), the interface 400 may include video image content and a control 406.

For example, the video image content may include but is not limited to: a video image 405 shown in FIG. 5c(1) to FIG. 5c(3), a control 4071 indicating time of the current play progress, a control 4072 (which, in this case, indicates that the video is in a paused state), a play progress bar 4074, a control 4073 located on the play progress bar 4074, where the control 4073 is used to adjust the play progress of the video, and a control 4075 indicating play duration. The video image content is content corresponding to a video of Episode 30 of the TV series with the series name "Series name A", where the video image 405 is a frame of video image at a 10^{th} minute of Episode 30 of the TV series.

For example, the video image content shown in FIG. 5c(2) may be blurred by the smart screen 202. This is not limited in this application.

For example, as shown in FIG. 5c(2), the control 406 may display play progress information of the user 1 for the video. Herein, the play progress information is "Last watched to Episode 30, 10 minutes".

For example, after the smart screen 202 displays the interface 400 shown in FIG. 5c(2) for very short time (for example, 0.2s, which is not limited herein), the smart screen 202 performs the following operations based on the play progress (10 minutes) corresponding to the play progress information, switches a display interface to the interface 400 shown in FIG. 5c(3), to start to play, from the corresponding play progress, a video of Episode 30 whose series name is "Series name A".

For example, as shown in FIG. 5c(3), the control 4072 indicates that the video is being played.

For example, the video stream of the video played in the interface 400 shown in FIG. 5c(3) may be a video stream obtained by a video application (corresponding to the video application X of the card 403 shown in FIG. 5b(1) to FIG. 5b(4)) locally installed on the smart screen 202, or may be a video stream obtained by the smart screen 202 from the mobile phone 1, for example, a video stream obtained in a projection manner. This is not limited in this application.

Certainly, in another embodiment, the smart screen 202 may alternatively directly switch from the interface 401 shown in FIG. 5c(1) to FIG. 5c(3) to play the video without going through FIG. 5c(2). This is not limited in this application.

In this embodiment of this application, the corresponding shortcut operation instruction is set for the audio/video application corresponding to the application information shared by the mobile phone to the smart screen. When the smart screen displays the AOD information of the corresponding audio/video application, the smart screen may support one-tap switching from the screen-off interface for displaying the AOD information to a play interface of the audio/video application. For example, the smart screen may start to play a corresponding audio/video from corresponding play progress based on a play record of a corresponding user of a mobile phone for the corresponding audio/video. For example, the user may quickly play the video content of the video application by performing an operation on the right button of the remote control of the smart screen 202. In this way, the user may perform a one-tap operation on the AOD information in the screen-off interface of the smart screen, and directly start service content corresponding to a corresponding service card, to implement one-tap access to the application data corresponding to the AOD information. The user does not need to perform a screen-on operation and enter the home screen of the smart screen to perform a search operation to display the application data. This can improve user interaction efficiency.

Optionally, after S101, if the smart screen detects that the distance between the smart screen and the mobile phone 1 does not meet the preset condition, as shown in FIG. 4a, when the AOD information is displayed in the screen-off interface, the smart screen may perform S109.

S109: The smart screen cancels displaying the AOD information.

For example, after that the distance between the mobile phone 1 and the smart screen meets the preset condition, and the smart screen displays the AOD information (for example, the card information in S104), if a distance between the mobile phone 1 and the smart screen does not meet the preset condition (for a specific determining policy, refer to the foregoing description. Details are not described herein again), for example, if the distance is greater than d4 shown in FIG. 5a, it indicates that the user does not need to watch a TV screen. In this case, to avoid screen burn-in and light pollution, the smart screen may cancel displaying the AOD information, and return to the black screen-off interface.

It should be understood that canceling displaying the AOD information may be triggered only when the smart screen is in the screen-off interface. After the screen of the smart screen is turned on, for example, after S108, a case of canceling displaying the AOD information is not involved.

Example 2: scenario in which the smart screen switches AOD information of different users

In this example, different users successively approach the smart screen. When the user 1 approaches the smart screen and the AOD information of the smart screen includes the application information of the user 1, the user 2 approaches the smart screen, and the smart screen switches the AOD information to application information corresponding to the user 2. For example, the user 1 is the user of the mobile phone 1, and the user 2 is a user of a mobile phone 2. This example is intended to describe a case in which the smart screen can switch the AOD information to application information corresponding to different users.

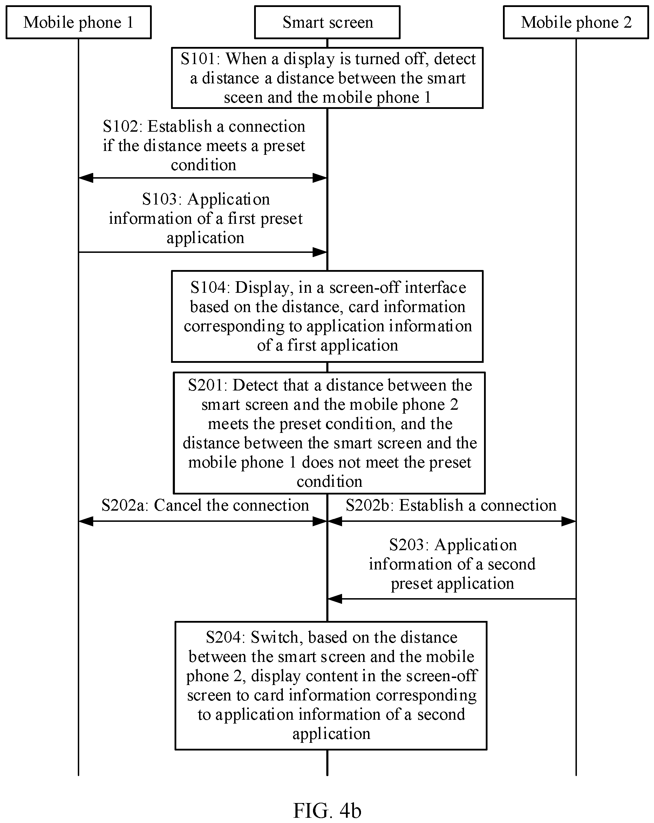

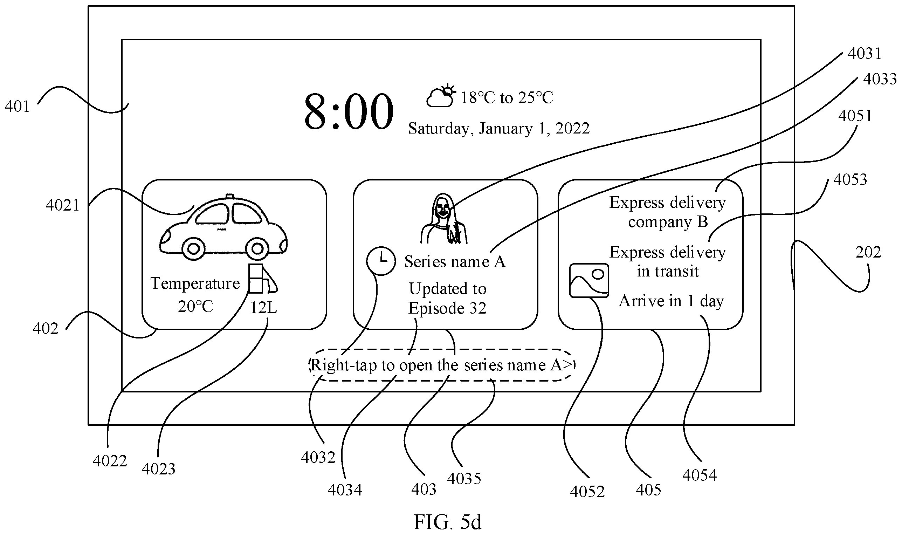

For example, refer to FIG. 4b, FIG. 5a, FIG. 5b(1) to FIG. 5b(4), FIG. 5c(1) to FIG. 5c(3), and FIG. 5d. As shown in FIG. 4b, the process may include the following steps.

S101: When the display is turned off, the smart screen detects the distance between the smart screen and the mobile phone 1.

For example, the smart screen may transmit a distance detection signal periodically, to detect a distance between the smart screen and any electronic device (or any user).

An execution principle of this step is similar to an execution principle of S101 in Example 1, and details are not described herein again.

S102: When determining that the distance between the smart screen and the mobile phone 1 meets the preset condition, the smart screen establishes the connection to the mobile phone 1.

An execution principle of this step is similar to an execution principle of S102 in Example 1, and details are not described herein again.

It should be understood that, in this application, the step of detecting a distance between the smart screen and another electronic device or the user by the smart screen and detecting whether the distance meets the preset condition and the step of establishing a connection to the another electronic device by the smart screen is not subject to an execution sequence. For example, the smart screen may alternatively establish the connection to the mobile phone 1 before S101.

S103: The smart screen obtains the application information of the first preset application from the mobile phone 1.

An execution principle of this step is similar to an execution principle of S103 in Example 1, and details are not described herein again.

S104: The smart screen displays, in the screen-off interface based on the distance between the smart screen and the mobile phone 1, the card information corresponding to the application information of the first application.

An execution principle of this step is similar to an execution principle of S104 in Example 1, and details are not described herein again.

In this example, different users successively approach the smart screen. The user 1 approaches the smart screen, and after the smart screen displays the AOD information corresponding to the application information of the user 1, the user 2 approaches the smart screen. In a process in which the user 2 approaches the smart screen, the user 1 is moving away from the smart screen, or the user 1 manually operates the mobile phone 1 to disconnect the Wi-Fi data connection between the mobile phone 1 and the smart screen, as shown in FIG. 3c(1). In this case, the smart screen may switch the AOD information from the application information of the user 1 to AOD information corresponding to the application information of the user 2.

For example, after S104, in S201, the smart screen detects that a distance between the smart screen and the mobile phone 2 meets the preset condition, and the smart screen detects that the distance between the smart screen and the mobile phone 1 does not meet the preset condition.

For example, when the smart screen is in the screen-off state, the smart screen may detect a distance between the smart screen and a surrounding electronic device or a user in real time or periodically.

An implementation process in which the smart screen detects whether the distance between the smart screen and the mobile phone 2 meets the preset condition is similar to the implementation process in which the smart screen detects whether the distance between the smart screen and the mobile phone 1 meets the preset condition described in Example 1. Details are not described herein again.

For example, after S201, the smart screen may perform S202a and S202b. An execution sequence of S202a and S202b is not limited in this application.

Optionally, S202a: The smart screen cancels the communication connection established to the mobile phone 1.

S202b: The smart screen establishes a communication connection to the mobile phone 2.

An execution principle of this step is similar to a principle of establishing the communication connection between the smart screen and the mobile phone 1. Details are not described herein again.

After S202b, the smart screen may perform S203.

S203: The smart screen obtains application information of a second preset application from the mobile phone 2.

An execution principle of this step is similar to an execution principle of S103 described in Example 1.

The second preset application herein may be the same as or different from the first preset application obtained from the mobile phone 1 in S103, and may be specifically different based on respective information sharing requirements of users of different mobile phones.

For example, even for a same preset application, application information generated when different users use the preset application may be different. In this example, the application information obtained by the smart screen from the mobile phone 1 in S103 may be different from information content of the application information obtained by the smart screen from the mobile phone 2 in S203.

For example, a flight on a date 1 booked through the mobile phone 1 and a flight on a date 2 booked through the mobile phone 2 have different dates. In addition, flight information may also be different.

S204: The smart screen switches, based on the distance between the smart screen and the mobile phone 2, display content in the screen-off interface to card information corresponding to application information of a second application.

For example, an implementation principle of displaying the card information of the application information based on the distance in this step is the same as an implementation principle described in S104 in Example 1. Details are not described herein again.

For example, the distance in this step is also a current distance between the smart screen and the mobile phone 2. When the distance changes, a display granularity and content of the AOD information may change. For example, a content amount, an information granularity, and a card style of the card information may all change with the distance.

In this step, a difference from S104 in Example 1 lies in that, before the card information corresponding to the mobile phone 2 is displayed in this step, the AOD information displayed by the smart screen is the card information of the mobile phone 1. In this step, the smart screen may switch content of the AOD information from application information corresponding to one user to application information corresponding to another user.

For example, when the smart screen 202 displays any interface 401 shown in FIG. 5b(1) to FIG. 5b(4), the smart screen 202 may switch, based on the distance between the smart screen 202 and the mobile phone 2, the AOD information in the screen-off interface of the smart screen 202 from display content in any interface 401 shown in FIG. 5b(1) to FIG. 5b(4) to content in an interface 401 shown in FIG. 5d.

For example, in the scenario in FIG. 5d, the smart screen 202 obtains application information of only two applications (for example, the video application X and a shopping application) from the mobile phone 2. In this case, the application information of the two applications is respectively displayed by using the card 403 and a card 405 shown in FIG. 5d. In this case, the remaining card 402 displays the information about the vehicle having the common attribute.

For example, information about the card 402 and the card 403 is similar to that in the embodiment in FIG. 5b(1) to FIG. 5b(4).

It should be understood that, in this implementation, both the user of the mobile phone 1 and the user of the mobile phone 2 use the video application X on respective mobile phones, and recently play the TV series whose series name is "Series name A." Therefore, in FIG. 5d, cards that are displayed in the screen-off interface 401 and that correspond to the application information of the mobile phone 2 also include the card 403.

For example, still refer to FIG. 5d. The card 405 is a card corresponding to express delivery progress information of the shopping application of the mobile phone 2. The smart screen 202 may obtain, from the mobile phone 2 through S203 shown in FIG. 4b, the express delivery progress information of the shopping application (for example, remaining time for an express delivery to reach a destination, an express delivery company name, an express delivery status (shipped, not shipped, received, and the like), and a preview image of an express delivery product).

For example, when the smart screen 202 displays the screen-off interface 401 shown in FIG. 5d, if the distance between the mobile phone 2 and the smart screen 202 is less than or equal to d1, the card 405 may include but is not limited to: a control 4051 indicating the express delivery company name of the express delivery, a control 4052 indicating the preview image of the express delivery product, a control 4053 indicating the express delivery status (herein, the control 4053 is "Express delivery in transit", indicating that the express delivery is in a "shipped" status), a control 4054 indicating the remaining time for the express delivery to reach the destination, and the like.

When the distance between the mobile phone 2 and the smart screen 202 changes, the granularity and the style of the display content of the AOD may also change in the screen-off interface 401 shown in FIG. 5d. A specific policy and implementation are similar to a principle of the process described for the mobile phone 1 in Example 1, and details are not described herein again.

In addition, it should be understood that Example 1 mainly describes a change of the AOD information displayed by the smart screen when the user 1 is at different distances in the scenario in which the user 1 approaches the smart screen. Similarly, on the premise that the distance between the user 1 and the smart screen is within the range of the preset threshold (the distance is less than or equal to d4), in a process in which the user 1 moves away from the smart screen, when the user 1 and the smart screen are at different distances, the style and the granularity of the AOD information displayed on the smart screen may also change. Principles are similar, and details are not described herein again. Certainly, the moving-away scenario is also applicable to the mobile phone 2 or another electronic device.

In this embodiment, for an electronic device having a common attribute, such as a smart screen or a smart cockpit (which is certainly not limited to an electronic device having a common attribute, and an implementation principle of this embodiment is similar), the smart screen may switch, based on different identities of users approaching the smart screen, the AOD information displayed on the screen to service content of the corresponding user. In this way, when different users approach the smart screen, content displayed in the screen-off interface of the smart screen may be the same as application information of an electronic device (for example, a mobile phone) of a user approaching the smart screen, to display important application information of the corresponding user in AOD information of the smart screen. For example, for different users in a family, the smart screen may intelligently present important application information of corresponding users in the AOD information.

In a possible implementation, after S204 shown in FIG. 4b, the smart screen may also perform a one-tap direct access on application data of a corresponding application (herein, the video application X corresponding to the card 403) of the mobile phone 2 in an AOD information display interface with reference to an implementation principle of S105 to S109 in FIG. 4a in Example 1. A specific implementation principle is similar, and details are not described herein again.

It should be understood that the solution of switching the AOD information to application information of different users by the smart screen in Example 2 may be applicable to a scenario in which the smart screen switches the AOD information from application information of one user to application information of another user in Example 2, may be applicable to a scenario in which the smart screen switches the AOD information from common information of a plurality of users to application information of a single user, and may be applicable to a user switching scenario like a scenario in which the smart screen switches the AOD information from application information of a single user to common information of a plurality of users. Specific implementation principles are similar, and details are not described herein again. The single user may be one of the plurality of users, or the single user is a user different from the plurality of users. In different scenarios, implementation principles of switching display content of the AOD by the smart screen are similar, and details are not described herein again.

### Example 3: scenario in which a plurality of persons approaches the smart screen

For example, Example 3 is intended to describe the scenario in which the plurality of users approach the smart screen, the plurality of users have an intent to watch the screen of the smart screen. In this case, the AOD information displayed by the smart screen may include common information between the plurality of users approaching the smart screen. For example, to protect user privacy, the smart screen may not display private application information of each user in the AOD information in a multi-person scenario.

In the scenario of Example 3, a plurality of persons may sequentially approach the smart screen, or may simultaneously approach the smart screen. This is not limited in this application.

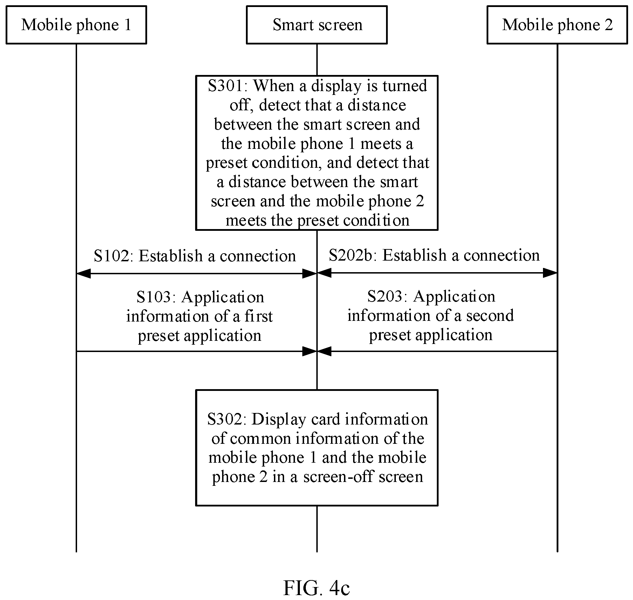

Refer to FIG. 4c and FIG. 5a to FIG. 5e. As shown in FIG. 4c, the process may include the following steps.

S301: When the display of the smart screen is turned off, the smart screen detects that the distance between the smart screen and a mobile phone 1 meets the preset condition, and the smart screen detects that the distance between the smart screen and the mobile phone 2 meets the preset condition.

As described in Example 1 and Example 2, the smart screen in this application may detect a distance between the smart screen and a surrounding electronic device or a distance between the smart screen and a surrounding user in real time or periodically. In this case, the smart screen may be used in the scenario in which the plurality of people approach the smart screen, and may detect distances to different users or electronic devices of the users, to determine whether the distances meet the preset condition.

It should be understood that an example in which a quantity of users approaching the smart screen is 2 is used for description herein. However, a quantity of users or electronic devices approaching the smart screen is not limited in this application, and may be greater than 2.

A principle of an implementation process of detecting whether a distance between the smart screen and each mobile phone meets the preset condition in step S301 is similar to the principle of the implementation process of detecting whether the distance between the smart screen and the mobile phone 1 meets the preset condition described in S102 in Example 1. Details are not described herein again.

In a possible implementation, to improve accuracy of determining a user intent, the smart screen not only needs to detect whether a distance is less than or equal to the preset threshold, but also needs to determine, with reference to a change of the distance with time (for example, a change of a speed and/or a change of an acceleration), whether the distance meets the preset condition.

For example, the smart screen determines that the distance is less than or equal to the preset threshold, and the moving speed of the mobile phone decreases with time relative to that of the smart screen (the moving speed may continuously or discontinuously decrease, and this is not limited herein, for example, the acceleration decreases). In this case, the smart screen may determine that the distance meets the preset condition.

For example, the smart screen determines that the distance is less than or equal to the preset threshold, a moving speed of the mobile phone decreases with time, and the distance decreases with time (which indicates that the mobile phone is approaching the smart screen). In this case the smart screen may determine that the distance meets the preset condition.

In this implementation, when a distance between the user holding the mobile phone and the smart screen is less than a specific distance, in a scenario in which the user moves close to the smart screen and a moving speed decreases until the user stops, the smart screen may detect the distance and a change of the distance with time, to accurately identify that the user has an intent to watch the smart screen.

Optionally, S102: The smart screen establishes the connection to the mobile phone 1.

Optionally, S103: The smart screen obtains the application information of the first preset application from the mobile phone 1 through the connection to the mobile phone 1.

Optionally, S202b: The smart screen establishes the connection to the mobile phone 2.

Optionally, S203: The smart screen obtains the application information of the second preset application from the mobile phone 2 through the connection to the mobile phone 2.

It should be understood that implementation principles and implementation processes of S102 and S103 in this example are the same as those of S102 and S103 in Example 1, and details are not described herein again.

It should be understood that implementation principles and implementation processes of S202b and S203 in this example are the same as those of S202b and S203 in Example 2, and details are not described herein again.

It should be understood that an execution sequence between S102 and S202b is not limited in this application. When the smart screen detects that a distance between the smart screen and a corresponding mobile phone meets the preset condition, the smart screen may obtain application data from the mobile phone side.

It should be understood that, in this application, the step of detecting a distance between the smart screen and another electronic device or the user by the smart screen and detecting whether the distance meets the preset condition and the step of establishing a connection to the another electronic device by the smart screen is not subject to an execution sequence. For example, the smart screen may alternatively establish a connection to a corresponding mobile phone before detecting a distance between the smart screen and the mobile phone 1 or the mobile phone 2.

For example, when detecting that the distance between the smart screen and the another electronic device or user meets the preset condition, the smart screen may obtain application data of the corresponding user from the corresponding electronic device or the cloud. This is not limited to a case in which the smart screen detects that the distance between the smart screen and the another electronic device meets the preset condition, to establish a connection with the corresponding electronic device.

It should be understood that an execution sequence between S103 and S203 is not limited in this application. After the smart screen detects that the distance between the smart screen and the corresponding mobile phone meets the preset condition, the smart screen may obtain application information of a specified application of a corresponding mobile phone account from the corresponding mobile phone.

It should be understood that, in the scenario in which the plurality of persons approach the smart screen, the screen-off interface of the smart screen displays only common information of the plurality of persons.

In a possible implementation, the common information of the plurality of persons may include private information of an application of each user. For example, in the scenarios in FIG. 5b(1) to FIG. 5d, both the user 1 of the mobile phone 1 and the user 2 of the mobile phone 2 use the video application X on respective mobile phones, where a TV series named "Series name A" is played recently. In this case, to display the common but private application information in the cards in the screen-off interface of the smart screen, the smart screen may perform S102, S202b, S103, and S203 shown in FIG. 4c.

In another possible implementation, in FIG. 4c, after performing S301, the smart screen may directly perform S302 without performing S102, S202b, S103, and S203. In this way, card information displayed by the smart screen in the screen-off interface in S203 is a card corresponding to application information obtained from an account of the smart screen. For example, the card may be application information (for example, information such as weather, a date, humidity, and a temperature) that corresponds to the account of the smart screen and that is unrelated to a private account, or may be device status information of an electronic device that has a common attribute and that corresponds to the account of the smart screen 202. For example, in a smart home scenario, each smart device may log in to a same account. In this case, the smart screen 202 may also obtain, from the cloud or the mobile phone, information about another common electronic device corresponding to the family account, and display the information as card information. For example, the another common electronic device may not only be a vehicle, but also include but is not limited to a smart oven, a smart speaker, a smart lock, and the like.

For example, after S103 and S203, the smart screen may perform S302.

S302: The smart screen displays card information of common information of the mobile phone 1 and the mobile phone 2 in the screen-off interface.

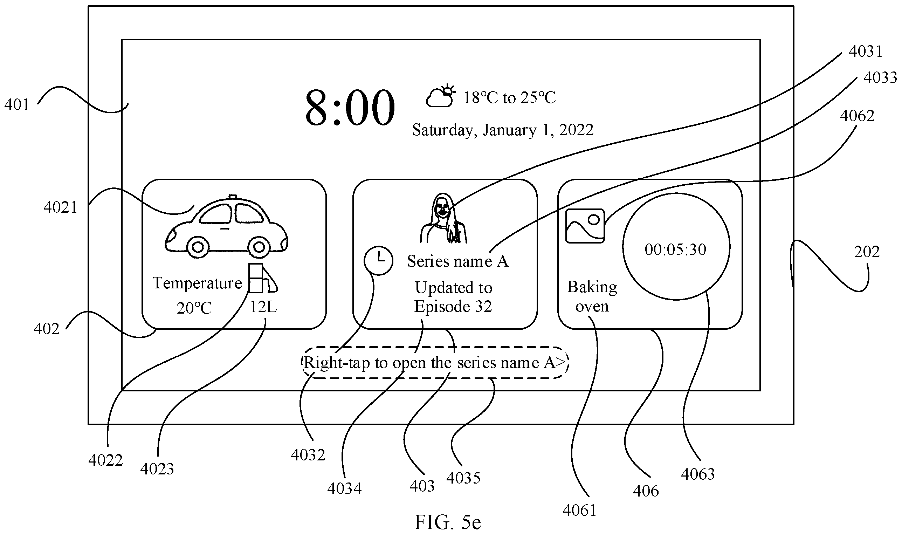

For example, as shown in FIG. 5e, the card information in the screen-off interface 401 includes the clock information and the weather information, and may include a card 402, the card 403, and a card 406.

For descriptions of the card 402 and the card 403, refer to the embodiment in FIG. 5b(1) to FIG. 5b(4). Details are not described herein again.

As shown in FIG. 5e, card information in the screen-off interface 401 is the common information of the mobile phone 1 and the mobile phone 2.

For example, as shown in FIG. 5e, the common information includes status information of common electronic devices that log in to a same account as the smart screen 202. The common electronic devices herein include a car corresponding to the card 402 and a smart oven corresponding to the card 406.

For example, as shown in FIG. 5e, the card 406 may include but is not limited to a control 4061 indicating a name of the common device, an oven image 4062, a control 4063 indicating countdown time information of the oven, and the like.

For example, as shown in FIG. 5e, the common information further includes application information that corresponds to the account of the smart screen 202 and that is unrelated to an individual user, for example, weather information and clock information.

For example, as shown in FIG. 5e, the common information further includes common application information in two groups of application information that are respectively shared by the mobile phone 1 and the mobile phone 2 to the smart screen 202. Herein, the common application information is application information corresponding to the card 403. For example, as long as the two mobile phones have played or searched for the TV series with the series name A in a recent period of time, play progress, play time, search records, and the like are not limited to be consistent herein. Similarly, in an audio application, provided that both the mobile phone 1 and the mobile phone 2 have generated application records (not limited to a search record, a play record, and the like) about a song or a singer in a recent period of time, the smart screen 202 may display information corresponding to the song or information corresponding to the singer in the screen-off interface 401 as a service card.

In a possible implementation, in the scenario in which the plurality of persons approach the smart screen, if an application corresponding to the card information displayed on the smart screen in S302 shown in FIG. 4c includes an audio/video application, after S302, the smart screen may also enable, based on the technical solution of one-tap direct access described in Example 1, a user to operate the card in the AOD information of the smart screen by triggering a shortcut instruction, to avoid an interaction operation of turning on the screen and entering the video play interface from the home screen. A specific process is similar to an implementation process and a principle of the one-tap direct access described in S105 to S108 in Example 1, and details are not described herein again.

For example, in the scenario in which the plurality of persons approach the smart screen, the plurality of persons may play a same audio/video at different progress. In this case, the play progress may be selected according to a specific policy. This is not limited herein.

In this embodiment of this application, when the plurality of persons approach the smart screen, and distances between the plurality of persons and the smart screen meet the preset condition, when the smart screen displays the AOD information in the screen-off interface, the smart screen may shield privacy information of users, and present only common information of the plurality of users.

It should be understood that the foregoing Example 1 to Example 3 are merely some examples of this application, and the technical solutions of this application are not limited thereto. In addition, the implementations mentioned above may be combined with each other to constitute a new implementation of this application.

It should be noted that same reference signs in FIG. 5a to FIG. 5e represent same objects. Therefore, the reference signs in the accompanying drawings are not explained and described one by one. For reference numerals that are not mentioned in the foregoing accompanying drawings, refer to explanations and descriptions of the same reference numerals mentioned in FIG. 5a to FIG. 5e. Details are not described herein again.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solution. A person skilled in the art may use different methods to implement the described functions for each particular application with reference to embodiments, but it should not be considered that the implementation goes beyond the scope of this application.

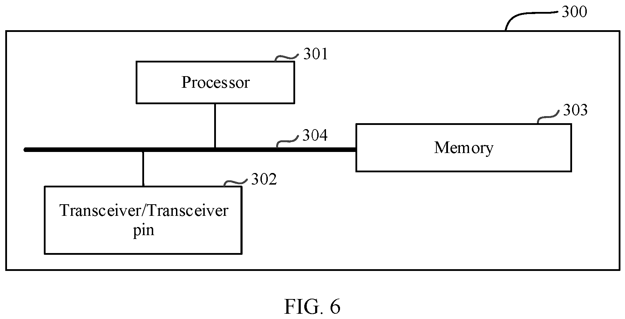

In an example, FIG. 6 is a block diagram of an apparatus 300 according to an embodiment of this application. The apparatus 300 may include a processor 301 and a transceiver/transceiver pin 302, and optionally, further include a memory 303.

Components of the apparatus 300 are coupled together by using a bus 304. In addition to a data bus, the bus 304 further includes a power bus, a control bus, and a status signal bus. However, for clear description, various types of buses in the figure are marked as the bus 304.

Optionally, the memory 303 may be configured to store instructions in the foregoing method embodiments. The processor 301 may be configured to: execute the instructions in the memory 303, control a receive pin to receive a signal, and control a transmit pin to send a signal.

The apparatus 300 may be the electronic device or a chip of the electronic device in the foregoing method embodiments.

All related content of the steps in the foregoing method embodiments may be cited in function descriptions of the corresponding functional modules. Details are not described herein again.

According to an embodiment, a computer storage medium is further provided. The computer storage medium stores computer instructions. When the computer instructions are run on an electronic device, the electronic device is enabled to perform the related steps of the method, to implement the information processing method in the foregoing embodiments.

This embodiment further provides a computer program product. When the computer program product runs on a computer, the computer is enabled to perform the related steps, to implement the information processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the information processing method in the foregoing method embodiments.

The electronic device, the computer storage medium, the computer program product, or the chip provided in this embodiment is configured to perform the corresponding method provided above. Therefore, for beneficial effect that can be achieved, refer to the beneficial effect of the corresponding method provided above. Details are not described herein again.

Based on the descriptions of the implementations, a person skilled in the art may understand that for the purpose of convenient and brief descriptions, division into the functional modules is merely used as an example for description. In actual application, the functions may be allocated to different functional modules for completion based on a requirement. In other words, an inner structure of an apparatus is divided into different functional modules, to complete all or some of the foregoing described functions.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

Any content in embodiments of this application and any content in a same embodiment can be freely combined. Any combination of the foregoing content falls within the scope of this application.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a network device. Certainly, the processor and the storage medium may exist in the network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An information processing method, applied to a first electronic device, wherein the method comprises:
displaying always on display AOD information in a screen-off interface, wherein the AOD information comprises application information of at least one application; and
in response to a received first user operation, displaying an application interface of a target application based on application data obtained from a second electronic device, wherein
the at least one application comprises the target application.

2. The method according to claim 1, wherein the displaying an application interface of a target application comprises:
displaying the application interface of the target application in a screen-on interface.

3. The method according to claim 1 or 2, wherein the application data comprises target application data that is of the target application and that is sent by the second electronic device to the first electronic device through a projection connection; and
the displaying an application interface of a target application based on application data obtained from a second electronic device comprises:
displaying the application interface of the target application based on the target application data.

4. The method according to any one of claims 1 to 3, wherein the application data comprises a uniform resource locator of the target application, and the displaying an application interface of a target application based on application data obtained from a second electronic device comprises:
displaying the application interface of the target application based on the uniform resource locator.

5. The method according to any one of claims 1 to 4, wherein the displaying always on display AOD information in a screen-off interface comprises:
when the first electronic device is in a screen-off state and detects that a distance between the first electronic device and the second electronic device meets a preset condition, displaying the AOD information in the screen-off interface.

6. The method according to any one of claims 1 to 5, wherein the displaying AOD information in a screen-off interface comprises:
displaying the AOD information in the screen-off interface based on a distance between the first electronic device and the second electronic device.

7. The method according to claim 6, wherein when the distance changes, a display style and/or display content of the AOD information change/changes.

8. The method according to claim 7, wherein a shorter distance indicates more display content.

9. The method according to any one of claims 1 to 8, wherein before the displaying AOD information in a screen-off interface, the method further comprises:
obtaining first application information from the second electronic device, wherein the first application information comprises the application information of the at least one application.

10. The method according to claim 9, wherein after the displaying AOD information in a screen-off interface, the method further comprises:
when the first electronic device is in the screen-off state and detects that a distance between the first electronic device and at least one third electronic device meets the preset condition, updating the AOD information in the screen-off interface, wherein updated AOD information comprises target common information obtained based on a device account of the first electronic device, wherein
the target common information is unrelated to respective device accounts of the second electronic device and the at least one third electronic device.

11. The method according to claim 10, wherein the target common information comprises:
first common information corresponding to the device account of the first electronic device, wherein
the first common information comprises application information unrelated to the device accounts of the second electronic device and the at least one third electronic device, and/or information about a smart home electronic device.

12. The method according to claim 10 or 11, wherein before the updating the AOD information in the screen-off interface, the method further comprises:
obtaining respective second application information from the at least one third electronic device, wherein
the target common information further comprises common application information; and
the common application information is common application information between the first application information and the respective second application information of the at least one third electronic device.

13. The method according to any one of claims 9 to 12, wherein after the displaying AOD information in a screen-off interface, or after the updating the AOD information in the screen-off interface, the method further comprises:
when the first electronic device is in the screen-off state and detects that only a distance between the first electronic device and a fourth electronic device meets the preset condition, continuing to update the AOD information in the screen-off interface, wherein updated AOD information comprises third application information obtained from the fourth electronic device.

14. The method according to claim 1, wherein the application data is application data related to target application information, and the target application information is application information of the target application in the AOD information.

15. An information processing system, comprising the first electronic device and the second electronic device according to any one of claims 1 to 13.

16. The system according to claim 15, wherein the system further comprises the at least one third electronic device according to any one of claims 1 to 14.

17. The system according to claim 15 or 16, wherein the system further comprises the fourth electronic device according to any one of claims 1 to 14.

18. An information processing apparatus, wherein the apparatus is configured to perform the information processing method according to any one of claims 1 to 14.

19. An electronic device, comprising a memory and a processor, wherein the memory is coupled to the processor, the memory stores program instructions, and when the program instructions are executed by the processor, the electronic device is enabled to perform the information processing method according to any one of claims 1 to 14.

20. A computer-readable storage medium, comprising a computer program, wherein when the computer program is run on an electronic device, the electronic device is enabled to perform the information processing method according to any one of claims 1 to 14.

21. A computer program product comprising instructions, wherein when the computer program product runs on a computer, the computer is enabled to perform the information processing method according to any one of claims 1 to 14.

22. A chip, comprising one or more interface circuits and one or more processors, wherein the interface circuit is configured to: receive a signal from a memory of an electronic device, and send the signal to the processor; the signal comprises computer instructions stored in the memory; and when the processor executes the computer instructions, the electronic device is enabled to perform the information processing method according to any one of claims 1 to 14.
